# EUROPÄISCHE PATENTSCHRIFT

(11) **EP 4 222 952 B1**
(45) Veröffentlichungstag und Bekanntmachung des Hinweises auf die Patenterteilung: **29.10.2025**
(21) Anmeldenummer: 21785833.1
(22) Anmeldetag: 28.09.2021
(51) Int. Cl.: H04N 13/246, H04N 17/00, G06T 7/80, G01C 11/02, G01C 25/00

(54) **VORRICHTUNG ZUM KALIBRIEREN EINER RÄUMLICHEN LAGE EINES ZENTRUMS EINER EINTRITTSPUPILLE EINER KAMERA, KALIBRIERVERFAHREN HIERFÜR SOWIE SYSTEM ZUR BESTIMMUNG RELATIVER POSITION VON ZENTREN VON EINTRITTSPUPILLEN MINDESTENS ZWEIER KAMERAS, DIE AN EINEM GEMEINSAMEN TRAGRAHMEN MONTIERT SIND, ZUEINANDER SOWIE BESTIMMUNGSVERFAHREN HIERFÜR**
DEVICE FOR CALIBRATING A SPATIAL POSITION OF A CENTER OF AN ENTRANCE PUPIL OF A CAMERA, CALIBRATING METHOD THEREFOR AND SYSTEM FOR DETERMINING THE RELATIVE POSITION OF CENTERS OF ENTRANCE PUPILS OF AT LEAST TWO CAMERAS, WHICH ARE MOUNTED ON A COMMON SUPPORT FRAME, RELATIVE TO EACH OTHER AND DETERMINATION METHOD THEREFOR
DISPOSITIF POUR ÉTALONNER UNE POSITION SPATIALE D'UN CENTRE DE PUPILLE D'ENTRÉE D'UNE CAMÉRA, PROCÉDÉ D'ÉTALONNAGE À CET EFFET ET SYSTÈME POUR DÉTERMINER LA POSITION RELATIVE DE CENTRES DE PUPILLES D'ENTRÉE D'AU MOINS DEUX CAMÉRAS QUI SONT MONTÉES SUR UN CADRE PORTEUR COMMUN, L'UNE PAR RAPPORT À L'AUTRE, ET PROCÉDÉ DE DÉTERMINATION CORRESPONDANT

(30) Priorität: 29.09.2020 DE 102020212279
(43) Veröffentlichungstag der Anmeldung: 09.08.2023
(73) Patentinhaber: Tripleye GmbH, 10999 Berlin (DE)
(72) Erfinder: SCHICK, Jens, 71083 Herrenberg (DE); SCHARRER, Michael, 76227 Karlsruhe (DE)
(74) Vertreter: Rau, Schneck & Hübner Patentanwälte Rechtsanwälte PartGmbB
(86) Internationale Anmeldenummer: PCT/EP2021/076560
(87) Internationale Veröffentlichungsnummer: WO 2022/069425

(56) Entgegenhaltungen:
- EP-A1- 3 644 281
- US-A1- 2017 374 360
- US-B1- 10 576 636

## Beschreibung

Die Erfindung betrifft eine Vorrichtung zum Kalibrieren einer räumlichen Lage eines Zentrums einer Eintrittspupille einer Kamera. Ferner betrifft die Erfindung ein Verfahren zum Kalibrieren einer räumlichen Lage eines Zentrums einer Eintrittspupille einer Kamera mit Hilfe einer derartigen Vorrichtung. Ferner betrifft die Erfindung ein System zur Bestimmung relativer Positionen von Zentren von Eintrittspupillen mindestens zweier Kameras, die an einem gemeinsamen Tragrahmen montiert sind, zueinander. Ferner betrifft die Erfindung ein Verfahren zur Bestimmung relativer Positionen von Zentren von Eintrittspupillen mindestens zweier Kameras mit einem derartigen System.

Eine Objekterfassungsvorrichtung ist bekannt aus der WO 2013/020872 A1 sowie der dort angegebenen Referenzen. Die US 2019/0 212 139 A1 beschreibt Werkzeuge und Verfahren zur 3D-Kalibrierung. Die US 2011/0 026 014 A1 offenbart Verfahren und Systeme zur Kalibrierung einer justierbaren Linse. Die DE 10 2018 108 042 A1 offenbart ein optisches Messsystem mit einer Kalibriervorrichtung. Die DE 10 2010 062 696 A1 offenbart ein Verfahren und eine Vorrichtung zum Kalibrieren und Justieren eines Fahrzeug-Umfeldsensors.

Die EP 3 644 281 A1 offenbart eine Kalibriervorrichtung und ein Kalibrierverfahren. Die US 10,576,636 B1 offenbart ein Steuerungssystem und ein Verfahren zu Aktualisierung einer Kalibrierung einer Kamera. Die US 2017/0 374 460 A1 offenbart ein System zur Kamera-Kalibrierung und ein Verfahren hierfür.

Es ist eine Aufgabe der vorliegenden Erfindung, Kameras, die insbesondere für derartige Objekterfassungsvorrichtungen genutzt werden können, hinsichtlich der räumlichen Lage ihres Eintrittspupillen-Zentrums präzise zu kalibrieren, diese Kameras also intrinsisch, also in Bezug auf Eigenschaften der Kamera selbst, insbesondere in Bezug auf Kamera-Abbildungseigenschaften und Abbildungsfehler, und ggf. auch extrinsisch, also in Bezug auf die Lage der Kamera relativ zur Kamera-Umgebung, zu kalibrieren.

Diese Aufgabe ist erfindungsgemäß gelöst durch eine Vorrichtung mit den im Anspruch 1 angegebenen Merkmalen.

Eine Lagekalibrierung des Eintrittspupillen-Zentrums kann in allen drei Raumrichtungen erfolgen. Das Kalibrier-Sichtfeld kann so groß sein, dass Kameras auch mit einem Öffnungswinkel, der größer ist als 180°, also insbesondere Fischaugen-Kameras, kalibriert werden können. Der zu kalibrierende Parameter "Zentrum der Kamera-Eintrittpupille" ist gleichbedeutend mit dem Parameter "Projektionszentrum" in der Terminologie der Epipolargeometrie.

Ein Zusatzparameter der Vorrichtung, der mit der Auswerteeinheit verarbeitet werden kann, ist eine Position der Zusatz-Kalibrierfläche, also beispielsweise, ob die Zusatz-Kalibrierfläche in der Neutralposition oder in der Betriebsposition vorliegt.

Die Kalibriervorrichtung erlaubt über die Bestimmung der räumlichen Lage des Eintrittspupillen-Zentrums die hieraus resultierende Bestimmung eines Verzerrungsvektorfeldes. Ein derartiges Verzerrungsvektorfeld gibt für jeden beliebigen, durch die zu kalibrierende Kamera abzubildenden Punkt im Raum an, um welchen Verzerrungsvektor dieser Punkt relativ zu einem ideal abgebildeten Punkt im Raum verschoben ist (Verzerrungsfehler). Über das Verzerrungsvektorfeld ist somit zum einen eine intrinsische Kalibrierung der zu kalibrierenden Kamera möglich, also eine Kalibrierung von deren Abbildungseigenschaften, als auch eine extrinsische Kalibrierung, also eine Bestimmung der Lage der Kamera relativ zu ihrer Umgebung. Bei der intrinsisch und/oder extrinsisch zu kalibrierenden Kamera bzw. den zu kalibrierenden Kameras kann es sich um ein Kamerabündel handeln, welches auf einem gemeinsamen Kameraträger montiert ist.

Mit Hilfe der Kalibriervorrichtung kann eine Positionsbestimmungsgenauigkeit erreicht werden, die besser ist als ein Kamerapixel und die auch besser sein kann als 0,8 Kamerapixel, als 0,6 Kamerapixel, als 0,4 Kamerapixel, als 0,2 Kamerapixel und sogar besser sein kann als 0,1 Kamerapixel. Insbesondere ein Verzerrungsfehler kann mit einer Genauigkeit von besser als 0,1 Kamerapixel bestimmt werden.

Eine absolute Positionserfassungsgenauigkeit der Lage des Eintrittspupillen-Zentrums der zu kalibrierenden Kamera kann besser sein als 0,2 mm. Eine Erfassung des Zentrums der Eintrittspupille der zu kalibrierenden Kamera kann auch in einer Dimension senkrecht zur Pupillenebene erfolgen.

Die Haupt- und/oder die Zusatz-Kalibrierstrukturen können mit einem regelmäßigen, zum Beispiel in Form eines Rasters angeordneten Muster vorliegen. Die Kalibrierstrukturen können farbige Musterelemente und/oder codierte Musterelemente, also zum Beispiel QR-Codes oder Strichcodes, enthalten. Die zu kalibrierende Kamera kann eine einzelne Kamera, kann eine Stereokamera oder auch eine Kameragruppe mit einer größeren Anzahl von Kameras sein. Eine Baseline einer derartigen Stereokamera, also ein Abstand zwischen den einzelnen Kameras der Stereokamera und/oder eine die Lagebeziehung der beiden Kameras der Stereokamera zueinander charakterisierende Richtung, oder Baselines von Kamerapaaren der Kameragruppe können dann ein ebenfalls zu kalibrierender Parameter sein. Eine Kalibrierung kann in einer Umgebung stattfinden, in der zwischen der zu kalibrierenden Kamera und den Kalibrierstrukturen eine Verzerrungsoptik, zum Beispiel eine Fahrzeug-Windschutzscheibe, angeordnet ist. Ein Kalibrieren mit Hilfe der Kalibriervorrichtung kann innerhalb einer Produkt-Fertigungslinie, beispielsweise innerhalb einer Kraftfahrzeug-Fertigungslinie, stattfinden.

Die Kalibrierflächen können in Form von Kalibrierstrukturen tragenden Kalibriertafeln vorliegen. Diese Kalibriertafeln können eben oder in Form einer dreidimensional im Raum liegenden Fläche gestaltet sein. Entsprechende Kalibriertafeln können miteinander so verbunden sein, dass zwischen zwei Kalibriertafeln ein fester, vorgegebener Winkel vorliegt. Mindestens zwei der Kalibriertafeln können auch gelenkig miteinander verbunden sein, sodass ein vorgebbarer Winkel zwischen den Kalibriertafeln eingestellt werden kann. Mehr als zwei derartige Kalibriertafeln können mit fest vorgegebenem Winkel und/oder mit einstellbarem Winkel miteinander verbunden sein.

Die Kalibrierflächen können Seitenflächen von Kalibrierkörpern darstellen, beispielsweise die Seitenflächen eines Kalibrierwürfels.

Mindestens eine der verwendeten Kalibrierflächen kann mit so ausgeführt sein, dass sie sich während der Durchführung eines Kalibrierverfahrens mit der Kalibrier-Vorrichtung bewegt.

Die Form sowie das Muster der Kalibrierstrukturen der Kalibrierflächen ist bekannt und ist in entsprechend digitalisierter Form in einem Speicher der Kalibriervorrichtung hinterlegt.

Bei den Kalibrierstrukturen kann es sich um multispektrale Kalibrierstrukturen handeln. Die Kalibrierstrukturen können entsprechend eine Textur in unterschiedlichen Spektralkanälen signalisieren. Für unterschiedliche Beleuchtungs- bzw. Abtastfarben können sich die Kalibrierstrukturen also unterschiedlich darstellen.

Die Kalibrierstrukturen können als Einzelpunkt-Strukturen ausgestaltet sein.

Die Kalibrierstrukturen können als Muster aus Einzelpunkten gestaltet sein. Ein derartiges Muster kann zufällig verteilte Einzelpunkte aufweisen, wobei das hierdurch gebildete Muster keine ausgezeichnete Symmetrieebene und/oder Symmetrieachse aufweist.

Die Kalibrierstrukturen können Struktur- und/oder Texturelemente aufweisen. Aus diesen Elementen kann eine eindeutige Zuordnung der jeweiligen Kalibrierstruktur bzw. einer hiermit ausgestatteten Kalibrierkomponente bei der Betrachtung mit unterschiedlichen Kameras gewonnen werden. Derartige Struktur- und/oder Texturelemente können eine Skalierungsinformation beinhalten. Eine derartige Skalierungsinformation kann auch aus einem Basisabstand der betrachteten Kameras bzw. aus einem Abstand einer betrachteten Kamera zur jeweiligen Kalibrierstruktur gewonnen werden.

Die stationären Referenzkameras können fest an einem Tragrahmen der Vorrichtung montiert sein und sind insbesondere fest relativ zur Halterung zum Halten der zu kalibrierenden Kamera montiert.

Bildaufnahmerichtungen der stationären Referenzkameras können sich in einem Punkt schneiden. Bei mehr als zwei stationären Referenzkameras können sich deren Bildaufnahmerichtungen im gleichen Punkt schneiden.

Bei einem Verfahren nach Anspruch 2 ist die Lagebestimmungsgenauigkeit beim Kalibrieren nochmals verbessert. Als zu verarbeitender Zustandsparameter wird hierbei die jeweilige Position der beweglichen Referenzkamera berücksichtigt. Die Sichtfeld-Aufnahmepositionen der beweglichen Referenzkamera können sich im Nickwinkel und/oder im Gierwinkel der beweglichen Referenzkamera unterscheiden. Ein betrachteter Referenzpunkt der beweglichen Referenzkamera auf der Haupt-Kalibrierfläche kann der gleiche Punkt sein.

Zusatz-Kalibrierstrukturen in 3D-Anordnung nach Anspruch 3 führen zu einer nochmaligen Verbesserung des Kalibrierergebnisses. Die Zusatz-Kalibrierstrukturen der jeweiligen Zusatz-Kalibrierfläche können in einer schüsselförmigen Anordnung vorliegen, bei der sich von einem zentralen "Boden"-Abschnitt dann schräge Wandabschnitte hin zu einem Rand der Zusatz-Kalibrierfläche erstrecken.

Der vorstehende Vorteil gilt entsprechend für Haupt-Kalibrierstrukturen nach Anspruch 4. Der Winkel unter dem die Haupt-Kalibrierstruktur-Ebenen angeordnet sind, kann größer sein als 10°, kann größer sein als 20°, kann größer sein als 30°, kann größer sein als 45°, kann größer sein als 60°, kann größer sein als 75° und kann beispielsweise 90° betragen. Es können mehr als zwei Haupt-Kalibrierstruktur-Flächen in den verschiedenen Haupt-Kalibrierstruktur-Ebenen vorliegen.

Die Vorteile eines Verfahrens nach Anspruch 5 entsprechen denen, die vorstehend mit Bezugnahme auf die Kalibrier-Vorrichtung bereits erläutert wurden. Ein Auswerten der aufgenommenen Bilddaten kann über eine Vektoranalyse der aufgenommenen Bilddaten unter Berücksichtigung der Positionen der aufgenommenen Strukturen erfolgen.

Bei einem Verfahren nach Anspruch 6 kommen die Vorteile der beweglichen Referenzkamera besonders gut zum Tragen. Bei dem Kalibrierverfahren unter Einsatz der beweglichen Referenzkamera kann beispielsweise zunächst in einer ersten Relativposition der beweglichen Referenzkamera die Haupt-Kalibrierfläche erfasst werden, wobei die Zusatz-Kalibrierfläche in der Neutralposition vorliegt, dann die Zusatz-Kalibrierfläche in die Betriebsposition verlagert werden und in der gleichen Relativposition der beweglichen Referenzkamera können dann die Zusatz-Kalibrierstrukturen vermessen werden. Anschließend kann die bewegliche Referenzkamera in eine weitere Sichtfeld-Aufnahmeposition verlagert werden und zunächst die Zusatz-Kalibrierstrukturen bei in der Betriebsposition verbleibender Zusatz-Kalibrierfläche vermessen werden. Schließlich wird die Zusatz-Kalibrierfläche in die Neutralposition verlagert und mit der in der weiteren Sichtfeld-Aufnahmeposition verbleibenden beweglichen Referenzkamera wird nun die Haupt-Kalibrierfläche vermessen.

Bei dem Kalibrierverfahren kann eine Beleuchtung der Kalibrierflächen mit Beleuchtungslicht mit unterschiedlichen spektralen Anteilen erfolgen. Hieraus kann auf eine chromatische Aberration beteiligter optischer Komponenten der Kalibriervorrichtung geschlossen werden. Auch eine Relativlage von Einzelkameras eines Twin- oder Mehr-Kamerasystems mit Einzelkameras, die für verschiedene Farben sensitiv sind, ist möglich.

Eine weitere Aufgabe der Erfindung ist es, eine Positionsbestimmung von Eintrittspupillen-Zentren mindestens zweier Kameras, die an einem gemeinsamen Tragrahmen montiert sind, beispielsweise einer Kameraanordnung entsprechend der WO 2013/020872 A1, zu verbessern.

Diese Aufgabe ist erfindungsgemäß gelöst durch ein System mit den in Anspruch 7 angegebenen Merkmalen.

Das System ist aufgrund der möglichen freien Relativanordnung der Kalibrierstruktur-Trägerkomponenten sehr flexibel einsetzbar. Die Anordnung der Kalibrierstruktur-Trägerkomponenten so, dass jede der Kameras mindestens Kalibrierstrukturen von zweien der Kalibrierstruktur-Trägerkomponenten erfasst, wobei zudem mindestens eine der Kalibrierstrukturen oder eine Gruppe von Kalibrierstrukturen ein und derselben Kalibrierstruktur-Trägerkomponente von zwei Kameras erfasst wird, führt zu einer präzisen Bestimmbarkeit der relativen Positionen der Eintrittspupillen-Zentren dieser Kameras.

Die Auswerteeinheit kann auch Zustandsparameter der Vorrichtung verarbeiten, zum Beispiel eine jeweilige Position des Tragrahmens zu den Kalibrierstruktur-Trägerkomponenten.

Vorteile des Bestimmungsverfahrens nach Anspruch 8 entsprechen zunächst denen des Systems. Beim Anordnungsschritt des Bestimmungsverfahrens können die Kalibrierstruktur-Trägerkomponenten um den Tragrahmen herum positioniert werden. Alternativ kann eine Gruppe von Kalibrierstruktur-Trägerkomponenten vorpositioniert werden und der Tragrahmen kann dann in diese Gruppe eingebracht werden. Auch Mischformen dieser beiden Grundvarianten des Anordnens sind möglich. Das Bestimmungsverfahren kann mit Kameras durchgeführt werden, die vorher das Kalibrier-Verfahren durchlaufen haben, das vorstehend im Zusammenhang mit den Ansprüchen 1 bis 7 erläutert wurde. Die Kalibrierstruktur-Trägerkomponenten können frei positionierbar sein. Ein Boden, auf dem die Kalibrierstruktur-Trägerkomponenten angeordnet werden, kann uneben sein. Die Kalibrierstrukturen der Kalibrierstruktur-Trägerkomponenten können ausgeführt sein, wie vorstehend im Zusammenhang mit den Haupt- und/oder Zusatz-Kalibrierstrukturen der Kalibrier-Vorrichtung ausgeführt wurde. Beim Auswerten können beim Bestimmungsverfahren Kamera-Relativpositions-Ergebnisse, die durch die Erfassung der Kalibrierstrukturen einer Kalibrierstruktur-Trägerkomponente gewonnen wurden, miteinander verglichen werden und hieraus kann ein Best-Fit der zu bestimmenden relativen Kamerapositionen ermittelt werden. Aus den bestimmten Relativpositionen kann unter Einbeziehung von Soll-Nominallagen der Kameras relativ zum Tragrahmen auf die Kamerapositionen im Koordinatensystem des Tragrahmens geschlossen werden.

Beim Verfahren nach Anspruch 9 ergibt sich eine besonders exakte relative Positionsbestimmung der Eintrittspupillen-Zentren der mindestens zwei Kameras. Alternativ kann das Erfassen und Verlagern auch so erfolgen, dass in benachbarten Kameras jeweils mindestens die gleiche Kalibrierstruktur mindestens einer der Kalibrierstruktur-Trägerkomponenten erfasst worden ist, sodass über jeweils benachbarte Kameras eine Verkettung der erfassten Bilddaten möglich ist. Es ist also nicht zwingend erforderlich, dass jede der Kameras Kalibrierstrukturen von mindestens zwei Kalibrierstruktur-Trägerkomponenten erfasst hat. Eine Verlagerung des Tragrahmens kann beispielsweise über eine Fahrzeugbewegung eines Fahrzeugs, zu dem der Tragrahmen gehört, erfolgen.

Masterstrukturen nach Anspruch 10 vereinfachen die Vorgabe eines Master-Koordinatensystems, in dem zunächst die relative Positionsbestimmung erfolgt.

Bei dem Bestimmungsverfahren können die Kalibrierstruktur-Trägerkomponenten an nominalen Anordnungskomponenten, deren Position und Lage im Raum bekannt ist, ausgerichtet werden. Derartige nominale Komponenten können fest installierte Kameras des Systems sein oder fest installierte Kalibrierstruktur-Trägerkomponenten. Eine Ausrichtung kann auch an Linearführungs-Koordinaten beweglicher Kalibrierstruktur-Trägerkomponenten und/oder des beweglichen Tragrahmens erfolgen.

Bei dem Verfahren könnten bewegte Kalibrierstruktur-Trägerkomponenten zum Einsatz kommen.

Im Rahmen des Verfahrens kann ein Verfahren zur Bestimmung eines Abstands einer Kamera von einer Kalibrierstruktur unter Zugrundelegung eines Abstands zweier benachbarter Kameras (Baseline) zum Einsatz kommen, insbesondere ein Triangulationsverfahren. Ein derartiger Abstand kann mithilfe eines Laser-Abstandsensors gemessen werden.

Die vorstehend beschriebenen Vorrichtungen und Verfahren sowie das System können auch miteinander kombiniert werden und können auch mit einer anderen Kombination der beschriebenen Merkmale realisiert sein. Beispielsweise ist es möglich, die Vorrichtung zum Kalibrieren mit dem System zur relativen Positionsbestimmung zu kombinieren und/oder die beschriebenen Verfahren zu kombinieren. Mit dem System nach Anspruch 7 kann, nach entsprechender Aufrüstung, grundsätzlich auch ein Kalibrierverfahren zum Einsatz kommen, welches vorstehend im Zusammenhang mit der Kalibrier-Vorrichtung nach den Ansprüchen 1 bis 4 erläutert wurde. Hierzu kann das System nach Anspruch 7 beispielsweise durch eine zusätzliche, bewegliche Referenzkamera aufgerüstet werden.

Ausführungsbeispiele der Erfindung werden nachfolgend anhand der Zeichnung näher erläutert. In dieser zeigen:
- Fig. 1: eine Aufsicht auf eine Vorrichtung zum Kalibrieren einer räumlichen Lage eines Zentrums einer Eintrittspupille einer Kamera, wobei eine Zusatz-Kalibierfläche sowohl in einer Neutralposition außerhalb eines Kamera-Sichtfeldes als auch in einer Betriebsposition im Kamera-Sichtfeld dargestellt ist;
- Fig. 2: eine Ansicht aus Richtung II in Figur 1 mit Zusatz-Kalibierflächen in der Neutralposition;
- Fig. 3: schematisch eine Darstellung zur Verdeutlichung von Lagebeziehungen zwischen Komponenten der Kalibrier-Vorrichtung;
- Fig. 4: eine weitere Details preisgebende Ansicht einer beweglichen Referenzkamera der Kalibrier- Vorrichtung einschließlich eines Kamera-Verlagerungsantriebs zur Bewegung der beweglichen Referenzkamera in mehreren Translations/Rotations-Freiheitsgraden;
- Fig. 5: schematisch verschiedene Ausrichtungen der beweglichen Referenzkamera, nämlich insgesamt acht Ausrichtungsvarianten;
- Fig. 6: eine Kalibriertafel mit einer Kalibrierfläche, aufweisend Kalibrierstrukturen, die als Haupt-Kalibrierfläche und/oder als Zusatz-Kalibrierfläche bei der Kalibrier-Vorrichtung zum Einsatz kommen kann;
- Fig. 7: in einer Ansicht von oben eine Anordnung eines Systems zur Bestimmung relativer Positionen von Zentren von Eintrittspupillen mindestens zweier Kameras, die an einem gemeinsamen Tragrahmen montiert sind, zueinander;
- Fig. 8: schematisch zwei Kameras einer Stereokamera zur räumlichen Bilderfassung, wobei Koordinaten und Lageparameter zur Bestimmung von WinkelKorrekturwerten der Kameras zueinander veranschaulicht sind;
- Fig. 9: wiederum schematisch die beiden Kameras der Stereokamera nach Figur 8 bei der Erfassung von Szenerie-Objekten einer räumlichen Szenerie, wobei Lageabweichungs-Parameter charakteristischer Signaturen der von den Kameras jeweils erfassten Bildern hervorgehoben sind;
- Fig. 10: ein Blockschaltbild zur Verdeutlichung eines Verfahrens zur räumlichen Bilderfassung mit Hilfe der Stereokamera nach den Figuren 8 und 9;
- Fig. 11: eine Vorrichtung zur Durchführung eines Verfahrens zur Erzeugung einer redundanten Abbildung eines Messobjektes unter Einsatz beispielsweise zweier Gruppen zu je drei einer gemeinsamen Signalverarbeitung zugeordneten Kameras;
- Fig. 12: in einer zu Figur 6 ähnlichen Darstellung eine weitere Ausführung einer Kalibriertafel mit Kalibrierstrukturen;
- Fig. 13: ebenfalls in einer Aufsicht eine weitere Ausführung einer Kalibriertafel, gestaltet als Platten-Target mit zwei miteinander verbundenen Kalibrierstruktur- Trägerkomponenten in Form von Kalibriertafeln nach Figur 12, deren Tafelebenen einen bekannten Winkel zueinander haben;
- Fig. 14: eine Ansicht des Platten-Targets nach Figur 13 aus Blickrichtung XIV, wobei zusätzlich eine auf dieses Platten-Target gerichtete Kamera dargestellt ist;
- Fig. 15: eine als Würfel ausgeführte Kalibrierstruktur-Trägerkomponente; und
- Fig. 16: eine Aufsicht auf eine Fertigungslinie mit an einen Fließband-Verlauf angepasster Anordnung von Kalibriertafeln mit Kalibrierstrukturen.

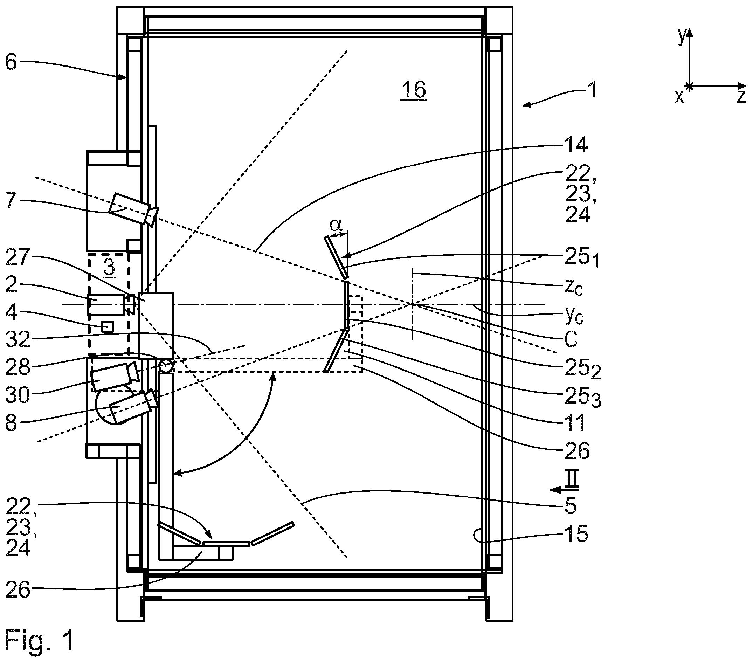

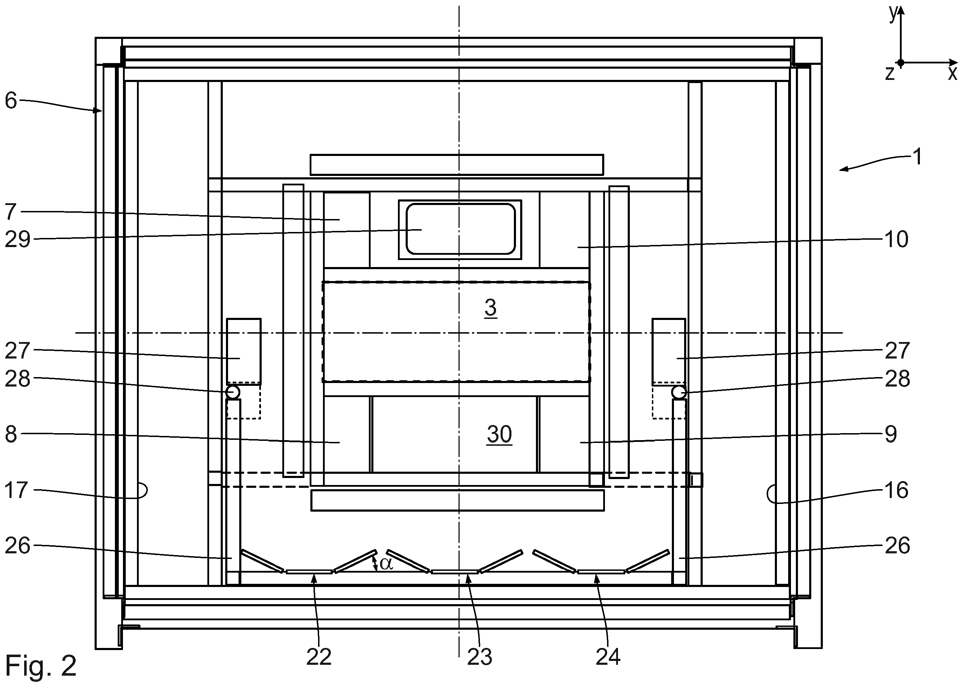

Eine Kalibrier-Vorrichtung 1 dient zum Kalibrieren einer räumlichen Lage eines Zentrums einer Eintrittspupille einer zu kalibrierenden Kamera 2. Die zu kalibrierende Kamera 2 ist innerhalb eines quaderförmigen Montagevolumens 3 angeordnet, welches in den Figuren 1 und 2 gestrichelt hervorgehoben ist. Innerhalb des Montagevolumens 3 wird die zu kalibrierende Kamera 2 bei der Durchführung des Kalibrierverfahrens fest montiert. Hierzu dient eine in der Figur 1 lediglich angedeutete Halterung 4. Mit der Halterung 4 wird die zu kalibrierende Kamera 2 derart gehalten, dass diese ein vorgegebenes Kalibrier-Sichtfeld 5 erfasst, dessen Begrenzungen in der Seitenansicht der Vorrichtung 1 nach Figur 1 gestrichelt dargestellt sind.

Bei der zu kalibrierenden Kamera 2 kann es sich beispielsweise um eine Kamera für ein Fahrzeug handeln, die zur Bereitstellung einer Funktion "autonomes Fahren" genutzt werden soll.

Je nach Ausführung der Kalibrier- Vorrichtung 1 kann mindestens ein Montagevolumen nach Art des Montagevolumens 3 vorgesehen sein, welches zur Aufnahme und entsprechenden Kalibrierung einer Mehrzahl zu kalibrierenden Kameras vorgesehen ist. Diese Mehrzahl zur Kalibrierung der Kameras kann simultan kalibriert werden.

Zur Erleichterung der Beschreibung von Lagebeziehungen insbesondere von Kameras der Vorrichtung 1 zueinander sowie zum Sichtfeld 5 ist in den Figuren 1 bis 3, soweit nichts Anderes angegeben, jeweils ein xyz-Koordinatensystem eingezeichnet. In der Figur 1 verläuft die x-Achse senkrecht zur Zeichenebene in diese hinein. Die y-Achse verläuft in der Figur 1 nach oben. Die z-Achse verläuft in der Figur 1 nach rechts. In der Figur 2 verläuft die x-Achse nach rechts, die y-Achse nach oben und die z-Achse verläuft senkrecht zur Zeichenebene aus dieser heraus.

Ein gesamter Sichtbereich des Kalibrier-Sichtfeldes 5 kann beispielsweise in der xz-Ebene einen Erfassungswinkel von 100° überdecken. Auch andere Erfassungswinkel zwischen beispielsweise 10° und 180° sind möglich. Grundsätzlich ist es auch möglich, Kameras mit einem Erfassungswinkel zu kalibrieren, der größer ist als 180°.

Die Halterung 4 ist an einem Tragrahmen 6 der Kalibrier-Vorrichtung 1 festgelegt.

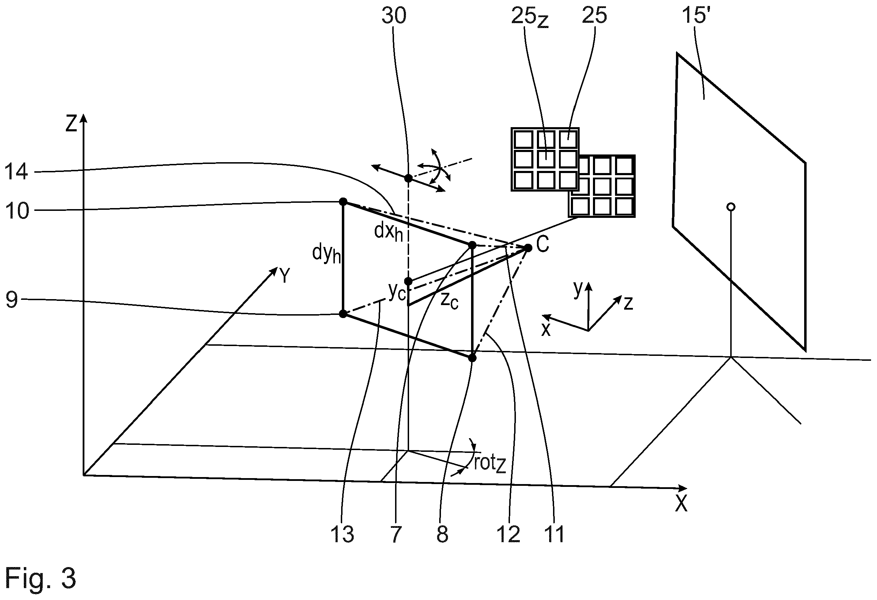

Die Kalibrier-Vorrichtung 1 hat mindestens zwei und bei der dargestellten Ausführung insgesamt vier stationäre Referenzkameras 7, 8, 9 und 10 (vgl. Figur 3), von denen in der Figur 1 lediglich zwei stationäre Referenzkameras, nämlich die Referenzkameras 7 und 8 sichtbar sind. Die stationären Referenzkameras 7 bis 10 sind ebenfalls am Tragrahmen 6 montiert. Die stationären Referenzkameras 7 bis 10 dienen zur Aufnahme des Kalibrier-Sichtfeldes 5 aus unterschiedlichen Richtungen. Auch eine größere Anzahl verwendeter Referenzkameras innerhalb der Kalibrier-Vorrichtung 1 ist möglich.

Die Referenzkameras 7 bis 10 können Kamerasysteme sein, bei denen Einzelkameras mit verschiedenen Objektiven zum Einsatz kommen, beispielsweise mit einem Teleobjektiv und mit einem Fischaugenobjektiv. Auch solche Kamerasysteme mit Einzelkameras mit unterschiedlichen Objektiven mit insbesondere unterschiedlichen Brennweiten werden, soweit zwei Einzelkameras zum Einsatz kommen, als Twin-Kameras bezeichnet.

Die Figur 3 zeigt beispielhafte Dimensionsparameter, die bei der Kalibrier-Vorrichtung 1 eine Rolle spielen.

Haupt-Sichtlinien 11, 12, 13, 14 der stationären Referenzkameras 7 bis 10 sind in der Figur 3 strichpunktiert dargestellt.

Diese Haupt-Sichtlinien 11 bis 14 schneiden sich in einem Punkt C (vgl. Figuren 1 und 3). Die Koordinaten dieses Schnittpunkts C sind in den Figuren 1 und 3 mit x_{c}, y_{c} und z_{c} bezeichnet.

Ein x-Abstand zwischen den Referenzkameras 7 und 10 einerseits und den Referenzkameras 8 und 9 andererseits ist in der Figur 3 mit dxₕ bezeichnet. Eine x-Koordinate der stationären Referenzkameras 7 und 8 einerseits und 9 und 10 andererseits ist jeweils gleich.

Ein y-Abstand zwischen den stationären Referenzkameras 7 und 8 einerseits und 9 und 10 andererseits ist in der Figur 3 mit dyₕ bezeichnet. Eine y-Koordinate der stationären Referenzkameras 7 und 10 einerseits und 8 und 9 andererseits ist jeweils gleich.

Die Kalibrier-Vorrichtung 1 hat weiterhin mindestens eine stationäre Haupt-Kalibrierfläche, im dargestellten Ausführungsbeispiel drei Haupt-Kalibrierflächen 15, 16 und 17, die von entsprechenden Kalibrier-Tafeln vorgegeben werden. Die Haupt-Kalibrierfläche 15 erstreckt sich bei der Anordnung nach den Figuren 1 und 2 parallel zur xy-Ebene und bei einer z-Koordinate, die größer ist als z_{c}. Die beiden weiteren, seitlichen Haupt-Kalibrierflächen 16, 17 erstrecken sich bei der Anordnung nach den Figuren 1 und 2 parallel zur yz-Ebene zu beiden Seiten der Anordnung der vier stationären Referenzkameras 7 bis 10. Die Haupt-Kalibrierflächen 15 bis 17 sind stationär ebenfalls am Tragrahmen 6 montiert.

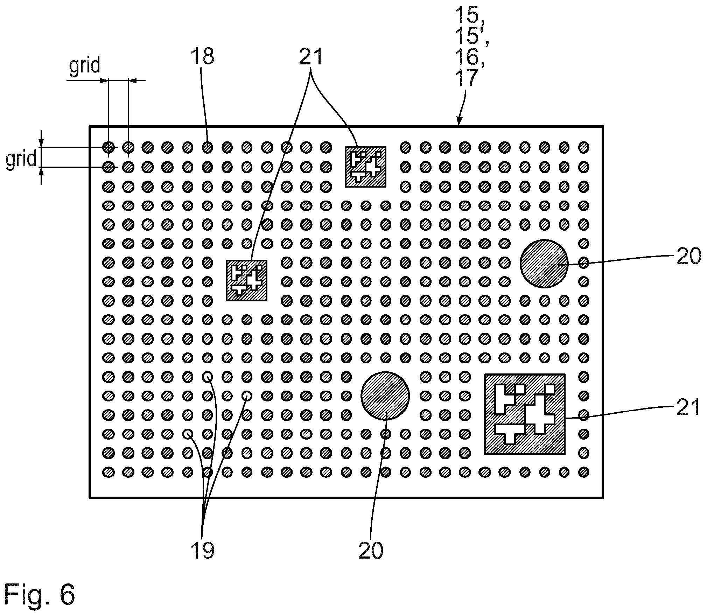

Die Haupt-Kalibrierflächen haben stationäre Haupt-Kalibrierstrukturen, für die Beispiele in der Figur 6 dargestellt sind. Jedenfalls einige dieser Kalibrierstrukturen sind im Kalibrier-Sichtfeld 5 angeordnet. Die Haupt-Kalibrierstrukturen können ein regelmäßiges, zum Beispiel in Form eines Rasters angeordnetes Muster aufweisen. Entsprechende Rasterpunkte, die Teil der Kalibrierstrukturen sind, sind in der Figur 6 bei 18 dargestellt. Die Kalibrierstrukturen können farbige Musterelemente aufweisen, wie in der Figur 6 bei 19 veranschaulicht. Weiterhin können die Kalibrierstrukturen unterschiedliche Größen haben. Im Vergleich zu den Rasterpunkten 18 vergrößerte Musterelemente als Haupt-Kalibrierstrukturen sind in der Figur 6 bei 20 hervorgehoben. Weiterhin können die Haupt-Kalibrierstrukturen kodierte Musterelemente, zum Beispiel QR-Codes 21 (vgl. Figur 6) aufweisen.

Eine zum xyz-Koordinatensystem nach den Figuren 1 und 2 ausgerichtete Anordnung der Haupt-Kalibrierflächen 15 bis 17 ist nicht zwingend. Figur 3 zeigt eine beispielhaft verkippte Anordnung einer Haupt-Kalibrierfläche 15', die beispielsweise zur xy-Ebene einen Winkel aufweist.

Zusätzlich ist in der Figur 3 noch ein externes Koordinatensystem XYZ beispielsweise einer Produktionshalle dargestellt, in dem die Kalibriervorrichtung 1 untergebracht ist. Das xyz-Koordinatensystem des Koordinatensystems der Kalibriervorrichtung 1 einerseits und das XYZ-Koordinatensystem der Produktionshalle können gegeneinander verkippt sein, wie in der Figur 3 durch einen Kippwinkel rot_{z} veranschaulicht ist.

Die Haupt-Kalibrierstrukturen 15 bis 17, 15' liegen also in einer Haupt-Kalibierstruktur-Hauptebene (xy-Ebene in der Anordnung nach den Figuren 1 und 2) und zusätzlich in einer Haupt-Kalibrierstruktur-Winkelebene (yz-Ebene in der Anordnung nach den Figuren 1 und 2) vor, wobei die Haupt-Kalibrierstruktur-Hauptebene xy unter einem Winkel größer als 5°, nämlich unter einem Winkel von 90°, zur Haupt-Kalibrierstruktur-Winkelebene yz angeordnet ist. Dieser Winkel zur Haupt-Kalibrierstruktur-Winkelebene yz kann je nach Ausführung größer sein als 10°, kann größer sein als 20°, kann größer sein als 30°, kann größer sein als 45° und kann auch größer sein als 60°. Kleine Winkel, zum Beispiel im Bereich zwischen 1° und 10°, können dazu genutzt werden, mit den Haupt-Kalibrierstrukturen eine gekrümmte Kalibrierstruktur-Fläche anzunähern. Bei der Anordnung nach den Figuren 1 und 2 sowie zusätzlich bei der Anordnung der Haupt-Kalibrierfläche 15' nach Figur 3 können mehr als zwei Haupt-Kalibrierstruktur-Flächen 15 bis 17, 15' in verschiedenen Haupt-Kalibrierstrukturebenen angeordnet sein.

Eine Position der jeweiligen Haupt-Kalibrierfläche, beispielsweise der Haupt-Kalibrierfläche 15' im Vergleich zum xyz-Koordinatensystem kann definiert werden über eine Position eines Zentrums der Haupt-Kalibrierfläche sowie zweier Kippwinkel der Haupt-Kalibrierfläche 15' zu den xyz-Koordinaten. Ein weiterer Parameter, mit dem die jeweilige Haupt-Kalibrierfläche 15 bis 17 bzw. 15' charakterisiert wird, ist ein Rasterabstand grid der Rasterpunkte 18 der Kalibrierstruktur, der in der Figur 6 veranschaulicht ist. Die beiden grid-Werte, die bei der Haupt-Kalibrierfläche 15' in der Figur 6 horizontal und vertikal gegeben sind, müssen nicht zwingend gleich zueinander sein, sie müssen aber fest vorgegeben und bekannt sein.

Auch die Positionen der farbigen Musterelemente 19, der vergrößerten Musterelemente 20 und/oder der kodierten Musterelemente 21 innerhalb des Rasters der Rasterpunkte 18 ist jeweils für die Haupt-Kalibrierfläche 15 bis 17, 15' fest vorgegeben. Diese Lagebeziehungen der verschiedenen Musterelemente 18 bis 21 zueinander dienen zur Identifikation der jeweiligen Haupt-Kalibrierfläche, zur Bestimmung der absoluten Lage der jeweiligen Haupt-Kalibierfläche im Raum. Die vergrößerten Musterelemente 20 können zur Stützung der jeweiligen Lagebestimmung herangezogen werden. Unterschiedliche Größen der Musterelemente 18 bis 20 und auch der kodierten Musterelemente 21 ermöglichen eine Kalibriermessung im Nah- und im Fernbereich sowie auch eine Messung, bei der die Haupt-Kalibrierflächen 15 bis 17, 15' gegebenenfalls stark zur xy-Ebene verkippt sind.

Weiterhin hat die Kalibrier-Vorrichtung 1 mindestens eine und in der dargestellten Ausführung drei Zusatz-Kalibrierflächen 22, 23 und 24 mit Zusatz-Kalibrierstrukturen 25. Die Zusatz-Kalibrierflächen 22 bis 24 sind durch schalenförmige Kalibriertafeln realisiert. Die Zusatz-Kalibrierstrukturen 25 sind auf der jeweiligen Zusatz-Kalibrierfläche 22 bis 24 in Form eines 3x3-Rasters angeordnet. Die Zusatz-Kalibrierstrukturen 25 können ihrerseits jeweils Musterelemente nach Art der Musterelemente 18 bis 21 aufweisen, die vorstehend im Zusammenhang mit den Haupt-Kalibrierflächen erläutert wurden.

Die Zusatz-Kalibrierflächen 22 bis 24 sind gemeinsam auf einem beweglichen Haltearm 26 montiert. Letzterer ist über einen Getriebemotor 27, also einen Kalibrierflächen-Verlagerungsantrieb, um eine Schwenkachse 28 schwenkbar, die parallel zur x-Richtung verläuft. Über den Getriebemotor 27 sind die Zusatz-Kalibrierstrukturen 22 bis 24 zwischen einer Neutralposition und einer Betriebsposition verlagerbar. Durchgezogen ist in den Figuren 1 und 2 jeweils die Neutralposition der Zusatz-Kalibrierstrukturen 22 bis 24 dargestellt, in der diese außerhalb des Kalibrier-Sichtfeldes 5 angeordnet sind. Gestrichelt ist in der Figur 1 eine im Vergleich zur Neutralposition hochgeschwenkte Betriebsposition des Haltearms 26 und der Zusatz-Kalibrierflächen 22 bis 24 dargestellt. In der Betriebsposition sind die Zusatz-Kalibrierflächen 22 bis 24 im Kalibrier-Sichtfeld 5 angeordnet.

In der Betriebsposition liegt eine zentrale Zusatz-Kalibrierstruktur 25_{Z} (vgl. auch Figur 3) beispielsweise, wie in den Figuren 1 und 2 gezeigt, parallel zur xy-Ebene. Die 3x3-Rasteranordnung der Zusatz-Kalibrierstrukturen 25 liegt in der Betriebsposition dann in drei längs der x-Richtung verlaufenden Zeilen 25₁, 25₂ und 25₃ sowie in drei parallel zur y-Richtung verlaufenden Spalten vor. Jeweils benachbarte Zeilen und jeweils benachbarte Spalten der Zusatz-Kalibrierstrukturen 25 sind zueinander um einen Kippwinkel α verkippt, der im Bereich zwischen 5° und 45°, beispielsweise im Bereich von 30° liegen kann. Für die vier jeweils in den Ecken des 3x3-Rasters angeordneten Rasterbereiche liegt diese Verkippung um den Kippwinkel α um zwei aufeinander senkrecht stehende Achsen vor. Es ergibt sich dann der schalenförmige Grundaufbau der jeweiligen Zusatz-Kalibrierfläche 22 bis 24. Die Zusatz-Kalibrierstrukturen 25 liegen in einer von einer ebenen Fläche abweichenden 3D-Anordnung vor.

Zur Kalibrier- Vorrichtung 1 gehört weiterhin eine Auswerteeinheit 29 zur Verarbeitung von aufgenommenen Kameradaten der zu kalibrierenden Kamera 2 sowie der stationären Referenzkameras 7 bis 10 sowie von Zustandsparametern der Vorrichtung, also insbesondere der Position der Zusatz-Kalibrierflächen 22 bis 24 sowie der Haupt-Kalibrierflächen 15 bis 17 sowie von Positionen und Sichtlinien-Verläufen der Referenzkameras 7 bis 10. Die Auswerteeinheit 29 kann einen Speicher für Bilddaten aufweisen.

Zur Kalibrier-Vorrichtung 1 gehört weiterhin eine bewegliche Referenzkamera 30, die ebenfalls der Aufnahme des Kalibrier-Sichtfeldes 5 dient.

Figur 3 veranschaulicht Bewegungsfreiheitsgrade der beweglichen Referenzkamera 30, nämlich zwei Kipp-Freiheitsgrade und einen Translationsfreiheitsgrad.

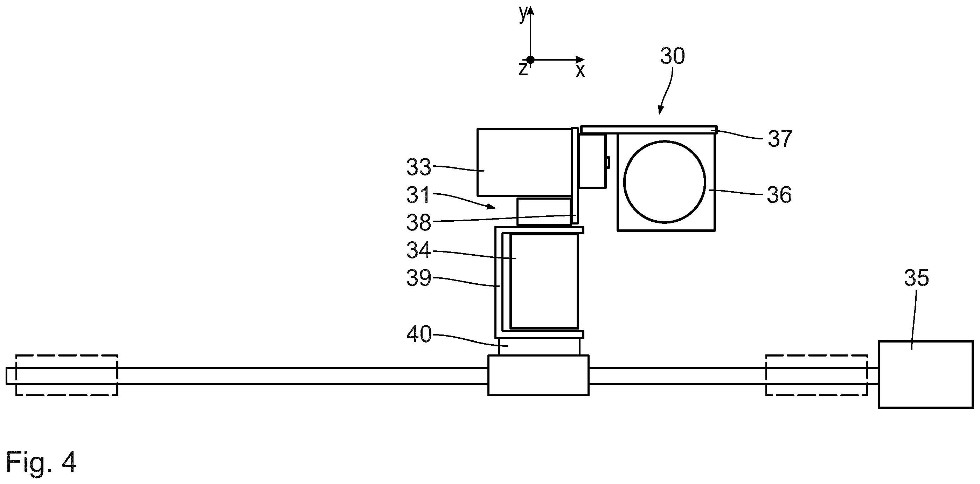

Figur 4 zeigt Details der beweglichen Referenzkamera 30. Diese ist über einen Kamera-Verlagerungsantrieb 31 zwischen einer ersten Sichtfeld-Aufnahmeposition und mindestens einer weiteren Sichtfeld-Aufnahmeposition verlagerbar, die sich von der ersten Sichtfeld-Aufnahmeposition in einer Bildaufnahmerichtung (vgl. die Aufnahmerichtung 32 in der Figur 1) unterscheidet.

Der Kamera-Verlagerungsantrieb 31 beinhaltet einen ersten Schwenkmotor 33, einen zweiten Schwenkmotor 34 und einen Linearverlagerungs-Motor 35. Ein Kamerakopf 36 der beweglichen Referenzkamera 30 ist an einer Schwenkkomponente des ersten Schwenkmotors 33 über eine Halteplatte 37 montiert. Über den ersten Schwenkmotor 33 kann der Kamerakopf 36 um eine Achse parallel zur x-Achse verschwenkt werden. Der erste Schwenkmotor 33 ist über eine weitere Halteplatte 38 an einem Schwenkelement des zweiten Schwenkmotors 34 montiert. Über den zweiten Schwenkmotor 34 ist ein Verschwenken des Kamerakopfes 36 um eine zur y-Achse parallele Schwenkachse möglich.

Über einen Haltebügel 39 ist der zweite Schwenkmotor 34 an einer Linearverlagerungseinheit 40 des Linearverlagerungs-Motors 35 montiert. Über den Linearverlagerungs-Motor 35 ist eine Linearverlagerung des Kamerakopfes 36 parallel zur x-Achse möglich.

Der Kamera-Verlagerungsantrieb 31 und auch der Kamerakopf 36 der Referenzkamera 30 stehen mit der Auswerteeinheit 29 in Signalverbindung. Die Lage des Kamerakopfes 36 wird dabei der Auswerteeinheit 29 abhängig von der Position der Motoren 33 bis 35 und auch abhängig von der Montagesituation des Kamerakopfes 36 zum ersten Schwenkmotor 33 jeweils exakt übermittelt.

Die über den ersten Schwenkmotor 33 vorgebbare Winkelposition des Kamerakopfes 36 wird auch als Nickwinkel bezeichnet. Anstelle des ersten Schwenkmotors 33 kann auch eine Veränderung eines Nickwinkels über eine Gelenkverbindung des Kamerakopfes 36 über eine zur x-Achse parallele Gelenkachse und einen in y-Richtung verlagerbaren Linearantrieb mit zwei Anschlägen zur Vorgabe zweier unterschiedlicher Nickwinkel, der mit dem Kamerakopf 36 verbunden ist, realisiert sein. Die über den zweiten Schwenkmotor 34 vorgebbare Winkelposition des Kamerakopfes 36 wird auch als Gierwinkel bezeichnet.

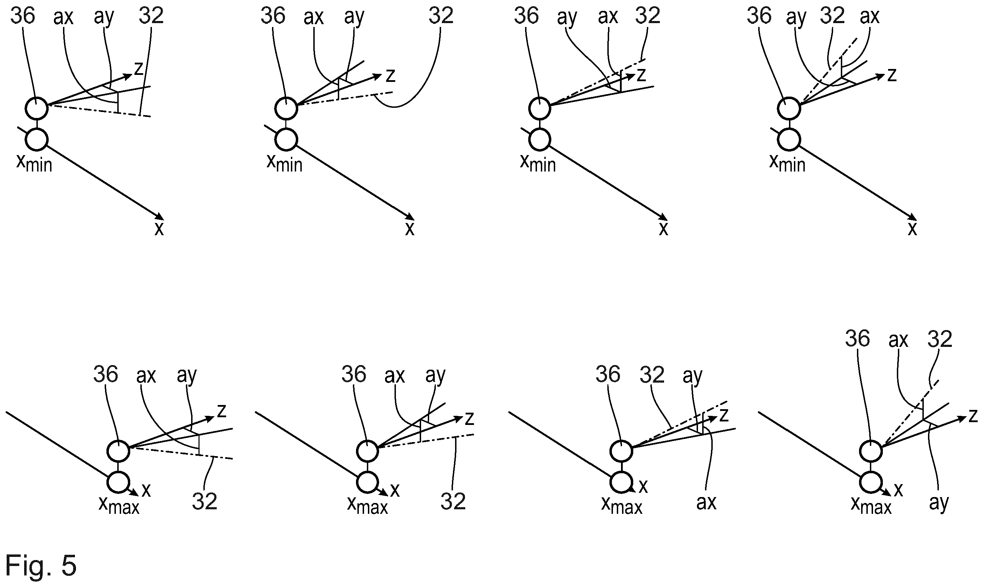

Figur 5 verdeutlicht beispielhaft acht Varianten von Positionierungen des Kamerakopfes 36 der beweglichen Referenzkamera 30 unter Nutzung der drei Bewegungs-Freiheitsgrade, die in der Figur 3 veranschaulicht sind.

Dargestellt ist strichpunktiert jeweils die Bildaufnahmerichtung 32 abhängig vom jeweils eingestellten Nickwinkel ax und Gierwinkel ay. In der oberen Zeile der Figur 5 liegt der Kamerakopf bei einer kleinen x-Koordinate xₘᵢₙ vor. In der unteren Zeile der Figur 5 liegt der Kamerakopf 36 an einer im Vergleich hierzu größeren x-Koordinate xₘₐₓ vor. Die acht Bildaufnahmerichtungen nach Figur 5 repräsentieren unterschiedliche Parametertripel (Position x; ax; ay) mit jeweils zwei diskreten Werten für jeden dieser drei Parameter.

Bei einer Variante der Kalibrier-Vorrichtung kann auf die bewegliche Referenzkamera 30 auch verzichtet werden.

Zum Kalibrieren einer räumlichen Lage eines Zentrums einer Eintrittspupille der zu kalibrierenden Kamera 2 wird die Kalibrier-Vorrichtung 1 folgendermaßen eingesetzt:
Zunächst wird die zu kalibrierende Kamera 2 in der Halterung 4 gehaltert.

Anschließend werden die stationären Haupt-Kalibrierflächen 15 bis 17 bzw. 15' mit der zu kalibrierenden Kamera 2 und den Referenzkameras 7 bis 10 sowie 30 erfasst, wobei die Zusatz-Kalibrierflächen 22 bis 24 in der Neutralposition vorliegen.

Die Zusatz-Kalibrierflächen 22 bis 24 werden dann zwischen der Neutralposition und der Betriebsposition mit dem Kalibrierflächen-Verlagerungsantrieb 27 verlagert. Anschließend werden die Zusatz-Kalibrierflächen 22 bis 24 mit der zu kalibrierenden Kamera 2 und mit den Referenzkameras 7 bis 10 sowie 30 erfasst, wobei die Zusatz-Kalibrierstrukturen 25 in der Betriebsposition vorliegen. Es werden dann die aufgenommenen Bilddaten der zu kalibrierenden Kamera 2 und der Referenzkameras 7 bis 10 sowie 30 mit der Auswerteeinheit 29 ausgewertet. Diese Auswertung erfolgt über eine Vektoranalyse der aufgenommenen Bilddaten unter Berücksichtigung der Positionen der aufgenommenen Kalibrierstrukturen 18 bis 21 sowie 25.

Beim Erfassen der Haupt-Kalibrierflächen 15 bis 17 und der Zusatz-Kalibrierflächen 22 bis 24 kann jeweils ein erstes Erfassen der Haupt-Kalibrierflächen 15 bis 17, 15' einerseits und der Zusatz-Kalibrierflächen 22 bis 24 andererseits mit der beweglichen Kamera 30 in der ersten Sichtfeld-Aufnahmeposition und, nach Verlagern der beweglichen Referenzkamera 30 mit dem Kamera-Verlagerungsantrieb 31, in der mindestens einen weiteren Sichtfeld-Aufnahmeposition erfolgen, wobei beim Auswerten der aufgenommenen Bilddaten auch die Bilddaten der beweglichen Referenzkamera 30 in den mindestens zwei Sichtfeld-Aufnahmepositionen berücksichtigt werden.

Eine Erfassungs-Reihenfolge der Kalibrierflächen 15 bis 17 sowie 22 bis 24 kann folgendermaßen sein: Zunächst werden die Haupt-Kalibrierflächen 15 bis 17 mit der beweglichen Kamera 30 in der ersten Sichtfeld-Aufnahmeposition erfasst. Dann werden die Zusatz-Kalibrierflächen 22 bis 24 in die Betriebsposition verlagert und mit der beweglichen Referenzkamera 30 wiederum in der ersten Sichtfeld-Aufnahmeposition erfasst. Die bewegliche Referenzkamera 30 wird dann in die weitere Sichtfeld-Aufnahmeposition verlagert, wobei die Zusatz-Kalibrierflächen 22 bis 24 in der Betriebsposition verbleiben. Anschließend erfolgt eine Erfassung der Zusatz-Kalibrierflächen 22 bis 24 mit der beweglichen Referenzkamera 30 in der weiteren Sichtfeld-Aufnahmeposition. Die Zusatz-Kalibrierflächen 22 bis 24 werden dann in die Neutralposition verlagert und es erfolgt ein weiteres Erfassen der Haupt-Kalibrierflächen 15 bis 17 mit der beweglichen Referenzkamera in der weiteren Sichtfeld-Aufnahmeposition. Während dieser Abfolge kann in Zeiträumen, in denen die Zusatz-Kalibrierflächen 22 bis 24 in der Neutralposition vorliegen, eine Erfassung der Haupt-Kalibrierflächen 15 bis 17 auch mit den stationären Referenzkameras 7 bis 10 erfolgen und, soweit die Zusatz-Kalibrierflächen 22 bis 24 in der Betriebsposition vorliegen, eine Erfassung von diesen Zusatz-Kalibrierflächen 22 bis 24 auch mit den stationären Referenzkameras 7 bis 10.

Eine Beleuchtung der Kalibrierflächen 15 bis 17, 22 bis 24 kann mit Beleuchtungslicht mit unterschiedlichen spektralen Anteilen erfolgen. Dies kann genutzt werden, um eine chromatische Aberration der zu kalibrierenden Kamera 2 und/oder der Referenzkamera 7 bis 10 zu berücksichtigen. Bei Einsatz von Twin-Kameras, also zum Beispiel von Kamerasystemen, bei denen mindestens eine RGB-Kamera und mindestens eine IR-Kamera im gleichen Gehäuse untergebracht ist, kann eine derartige multispektrale Beleuchtung zum Bestimmen einer Relativlage der einzelnen Kameras zueinander im Kamerasystem genutzt werden. Jede der Kameras kann mit einer kameraspezifischen spektralen Beleuchtung kalibriert werden. Hierbei werden Parameter, die Abbildungsfehler charakterisieren, beispielsweise Verzerrungsparameter, sowie eine Lage der Kamera beispielsweise zu zumindest einer der Haupt-Kalibrierflächen 15 bis 17 ermittelt. Wenn entsprechende Kalibrierungen einer RGB/IR-Twin-Kamera mit derselben Haupt-Kalibrierfläche 15 bis 17 ermittelt werden, lässt sich aus den beiden sich ergebenden Lagen der RGB-Kamera einerseits und der IR-Kamera andererseits einer solchen Twin-Kamera auch die Relativlage dieser beiden Einzelkameras der Twin-Kameras zueinander berechnen.

Beim Einsatz von Kamerasystemen mit Einzelkameras mit unterschiedlichen Objektiven können die Kalibrierstrukturen der Kalibrierflächen 15 bis 17, 22 bis 24 Muster aus Einzelpunkten unterschiedlicher Größe aufweisen. Details zu derartigen, möglichen Mustern werden nachfolgend im Zusammenhang mit einem System zur Bestimmung relativer Positionen von Zentren von Eintrittspupillen mindestens zweier Kameras noch erläutert.

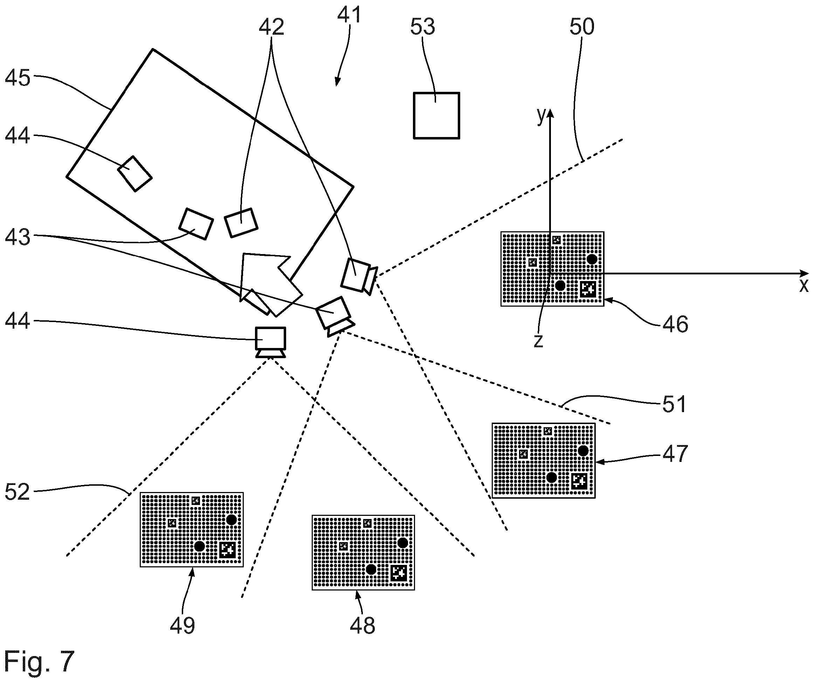

Anhand der Figur 7 wird nachfolgend ein System 41 zur Bestimmung relativer Positionen von Zentren von Eintrittspupillen mindestens zweier Kameras 42, 43, 44 zueinander beschrieben, die an einem gemeinsamen Tragrahmen 45 montiert sind.

Die Kameras 42 bis 44 können dabei vorab hinsichtlich der Lage ihres jeweiligen Eintrittspupillen-Zentrums mit Hilfe der Kalibrier-Vorrichtung 1 kalibriert worden sein.

Eine nominale Position der Kameras 42 bis 44 relativ zum Tragrahmen 45, also eine Soll-Einbauposition ist bei Durchführung dieser relativen Positionsbestimmung mittels des Systems 41 bekannt.

Bei den Kameras 42 bis 44 kann es sich beispielsweise um Kameras an einem Fahrzeug handeln, die zur Bereitstellung einer Funktion "autonomes Fahren" genutzt werden sollen.

Das System 41 hat mehrere Kalibrierstruktur-Trägerkomponenten 46, 47, 48 und 49. Diese Kalibrierstruktur-Trägerkomponenten 46 bis 49 werden nachfolgend auch als Platten-Targets oder als Targets bezeichnet.

Bei der Kalibrierstruktur-Trägerkomponente 46 handelt es sich um eine Master-Komponente zur Vorgabe eines Master-Koordinatensystems xyz. Die x-Achse dieses Master-Koordinatensystems verläuft in der Figur 7 nach rechts, die y-Achse verläuft nach oben und z-Achse verläuft senkrecht zur Zeichenebene aus dieser heraus.

Für die Kalibrierstrukturen, die auf den Kalibrierstruktur-Trägerkomponenten 46 bis 49 aufgebracht sind, gilt, was vorstehend zu den Kalibrierstrukturen 18 bis 21 in Zusammenhang insbesondere mit der Figur 6 erläutert wurde.

Die Kalibrierstruktur-Trägerkomponenten 46 bis 49 sind in einer Betriebsposition des Systems 41 um den Tragrahmen 45 herum so angeordnet, dass jede der Kameras 42 bis 44 mindestens Kalibrierstrukturen von zweien der Kalibrierstruktur-Trägerkomponenten 46 bis 49 erfasst. Eine derartige Anordnung ist nicht zwingend, es ist also möglich, dass zumindest einzelne der Kameras 42 bis 44 Kalibrierstrukturen von lediglich genau einer der Kalibrierstruktur-Trägerkomponenten 46 bis 49 erfassen. Die Anordnung der Kalibrierstruktur-Trägerkomponenten 46 bis 49 ist zudem so, dass mindestens eine der Kalibrierstrukturen auf genau einer der Kalibrierstruktur-Trägerkomponenten 46 bis 49 von zweien der Kameras 42 bis 44 erfasst wird. Um diese Bedingungen zu gewährleisten, kann gegebenenfalls der Tragrahmen 45 relativ zu den Kalibrierstruktur-Trägerkomponenten 46 bis 49, die ihre Positionen jeweils nicht ändern, verlagert werden.

Figur 7 verdeutlicht ein Lagebeispiel des Tragrahmens 45 mit Ist-Positionen der Kameras 42, 43, 44 auf dem nicht nochmals gezeigten Tragrahmen derart, dass ein Sichtfeld 50 der Kamera 42 die Kalibrierstrukturen der Kalibrierstruktur-Trägerkomponenten 46 und 47 erfasst, während die Kamera 43 mit ihrem Sichtfeld 51 die Kalibrierstrukturen der Kalibrierstruktur-Trägerkomponenten 47 und 48 erfasst und während die weitere Kamera 44 mit ihrem Sichtfeld 52 die Kalibrierstrukturen der Kalibrierstruktur-Trägerkomponenten 48 und 49 erfasst.

Eine relative Lage der Kalibrierstruktur-Trägerkomponenten 46 bis 49 zueinander muss vorab nicht streng definiert sein, darf sich aber während des Positionsbestimmungsverfahrens mittels des Systems 41 nicht ändern.

Zum System 41 gehört weiterhin eine Auswerteeinheit 53 zur Verarbeitung von aufgenommenen Kameradaten der Kameras 42 bis 44 sowie gegebenenfalls von Zustandsparametern während der Positionsbestimmung, also insbesondere einer Identifikation des jeweiligen Tragrahmens 45.

Zur Bestimmung der relativen Positionen der Eintrittspupillen-Zentren der Kameras 42 bis 44 wird das System 41 folgendermaßen eingesetzt:
In einem ersten Vorbereitungsschritt werden die Kameras 42 bis 44 am gemeinsamen Tragrahmen 45 montiert. In einem weiteren Vorbereitungsschritt werden die Kalibrierstruktur-Trägerkomponenten 46 bis 49 als Gruppe von Kalibrierstruktur-Trägerkomponenten um den Tragrahmen 45 herum angeordnet. Dies kann auch so geschehen, dass die Gruppe der Kalibrierstruktur-Trägerkomponenten 46 bis 49 in einem Vorbereitungsschritt ausgelegt wird und der Tragrahmen dann relativ zu dieser Gruppe in Position gebracht wird. Zudem wird über die Ausrichtung der Masterkomponente 46 das xyz-Koordinatensystem definiert. Die anderen Kalibrierstruktur-Trägerkomponenten 47 bis 49 müssen nicht zu diesem xyz-Koordinatensystem ausgerichtet sein.

Nun erfolgt ein Erfassen der im Sichtfeld der Kameras 42 bis 44 liegenden Kalibrierstruktur-Trägerkomponenten 46 bis 49 in einer vorgegebenen Relativposition des Tragrahmens 45 zur Gruppe der Kalibrierstruktur-Trägerkomponenten 46 bis 49, beispielsweise in der Ist-Position der Kameras 42 bis 44 nach Figur 7. Die aufgenommenen Bilddaten der Kameras 42 bis 44 werden dann mit der Auswerteeinheit 53 ausgewertet, sodass die exakten Lagen der Zentren der Eintrittspupillen sowie auch der Bildaufnahmerichtungen der Kameras 42 bis 44 im Koordinatensystem der Master-Komponente 46 ermittelt werden. Diese Ist-Positionen werden dann in Koordinaten des Tragrahmens 45 umgerechnet und mit den nominalen Soll-Positionen abgeglichen. Dies kann im Rahmen eines Best Fit-Verfahrens geschehen.

Bei dem Bestimmungsverfahren kann der Tragrahmen zwischen verschiedenen Kamera-Erfassungspositionen auch derart verlagert werden, dass mindestens eine der Kameras, deren Relativposition bestimmt werden soll, eine Kalibrierstruktur-Trägerkomponente erfasst, die vorher von dieser Kamera noch nicht erfasst war. Dieser Schritt des Erfassens und des Verlagerns des Tragrahmens kann so oft wiederholt werden, bis für alle Kameras, deren Relativpositionen zueinander bestimmt werden sollen, die Bedingung erfüllt ist, dass jede der Kameras mindestens Kalibrierstrukturen von zweien der Kalibrierstruktur-Trägerkomponenten erfasst, wobei mindestens eine der Kalibrierstrukturen von zwei der Kameras erfasst wird.

Jedes der Platten-Targets 46 bis 49 hat grundsätzlich sechs Lage-Freiheitsgrade, nämlich drei Freiheitsgrade der Translation in x-, y- und z-Richtung und drei Freiheitsgrade der Rotation um eine Achse parallel zur x-Achse, parallel zur y-Achse oder parallel zur z-Achse. Diese rotatorischen Freiheitsgrade werden auch als ax, ay und az bezeichnet.

Beim Auflegen der Platten-Targets 46 bis 49 auf einem ebenen Untergrund sind drei der sechs Freiheitgrade "gefangen", nämlich die Freiheitsgrade z (Bodenniveau) sowie ax und ay (Ebene des Bodens). Deshalb bleiben dann noch die Freiheitsgrade x, y und az zur Bestimmung bzw. zur Schätzung mittels der Kameraerfassung übrig.

Eine Richtung az kann mithilfe eines Kompasses des Systems 41 ermittelt werden, sodass noch die beiden Freiheitsgrade x und y als zu bestimmende Freiheitsgrade verbleiben.

Soweit die Platten-Targets entlang einer Linie x=x₀ gelegt werden, verbleibt als einziger Freiheitsgrad die y-Koordinate.

Je nach Ausführung können die Platten-Targets 46 bis 49 auch in z-Richtung zueinander höhenverschoben angeordnet werden, sodass in diesem Fall regelmäßig die Freiheitsgrade x, y, z sowie az bestimmt bzw. geschätzt werden müssen.

Auch andere Kombinationen von aufgrund der Randbedingungen "gefangenen" und freien, also zu bestimmenden/zu schätzenden Freiheitsgraden sind je nach Ausführung des Systems 41 möglich.

Eines der jeweiligen Platten-Targets 46 bis 49 kann aus zwei miteinander verbundenen Kalibrierstruktur-Trägerkomponenten bestehen, die einen festen und bekannten Winkel zueinander haben.

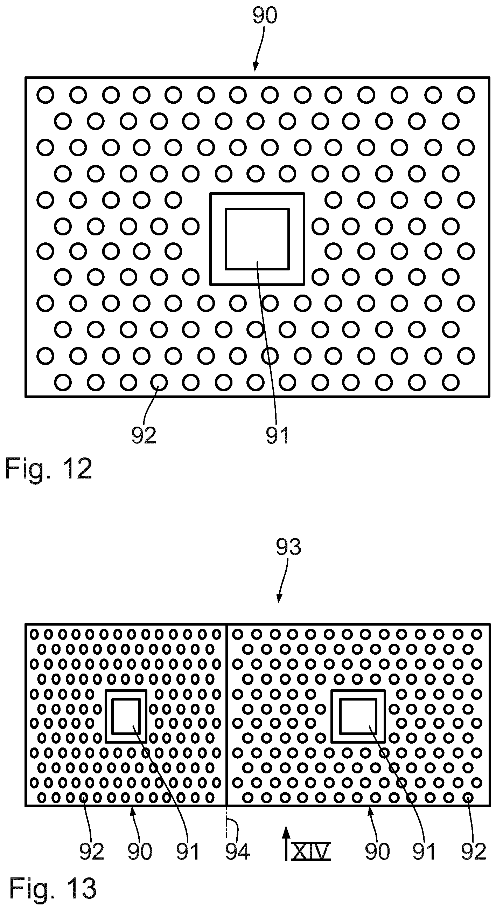

Figur 12 zeigt eine weitere Ausführung einer Kalibriertafel 90 mit einer Kalibrierstrukturen aufweisenden Kalibrierfläche, die wiederum als Haupt-Kalibrierfläche und/oder als Zusatz-Kalibrierfläche anstelle der vorstehend erläuterten Kalibrierflächen bei der Kalibrier-Vorrichtung 1 und/oder beim System 41 zum Einsatz kommen kann. Die Kalibriertafel 90 hat ein zentrales Musterelement 91, das nach Art der Musterelemente 20, 21 der vorstehend beschriebenen Kalibriertafeln gestaltet sein kann.

Ein Muster beziehungsweise ein Marker des zentralen Musterelements 91 kann kodiert vorliegen. Bei einem derartigen Marker kann es sich um einen Augmented Reality (AR) Marker handeln. Ein diesbezüglich nutzbarer Marker ist als ArUco^{™}-Marker bekannt.

Auch eine andere Form einer Kodierung kann als ein Beispiel für das zentrale Musterelement 91 herangezogen werden.

Weiterhin hat die Kalibriertafel 90 Rasterpunkte 92 nach Art der Rasterpunkte 18, die vorstehend erläutert wurden. Zusätzlich zu den Rasterpunkten 91 können auch farbige Musterelemente vorgesehen sein, wie vorstehend unter Bezugnahme auf die Figur 6 erläutert.

Die Rasterpunkte 92 sind in Form einer hexagonalen regelmäßigen Struktur 12 auf der Kalibriertafel 90 aufgebracht.

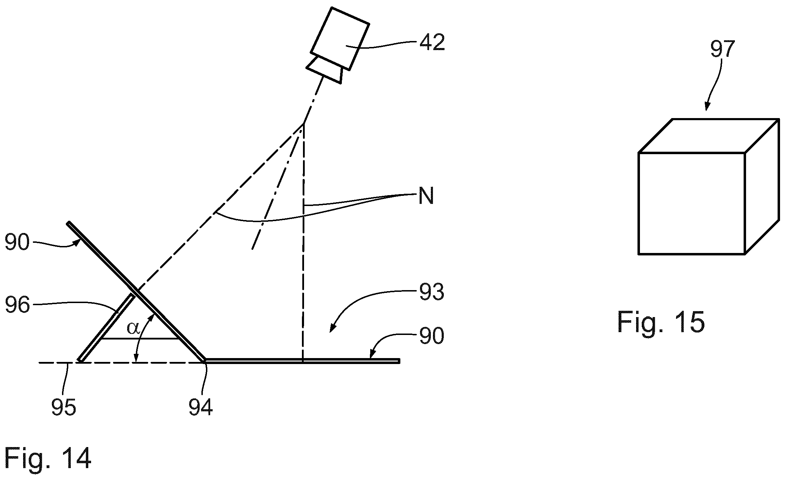

Die Figuren 13 und 14 zeigen eine Ausführung eines Platten-Targets 93, bestehend aus zwei miteinander verbundenen Kalibrierstruktur-Trägerkomponenten nach Art der Kalibriertafeln 90. Die beiden Kalibriertafeln 90 des Platten-Targets 93 sind über eine Gelenkachse 94, die senkrecht auf der Zeichenebene der Figur 14 steht, miteinander verbunden und nehmen einen bekannten Winkel α zueinander ein, der bei der Ausführung nach den Figuren 13 und 14 45° beträgt. Hierzu ist die in den Figuren 13 und 14 linke Kalibriertafel 90 gegenüber einer Bodenebene 95 (zum Beispiel ax, ay) um die Gelenkachse 94 hochgeklappt bzw. gefaltet. Die hochgeklappte Kalibriertafel 90 wird über eine Stützstruktur 96, die den Faltwinkel α vorgibt, abgestützt.

Ein derartiges Platten-Target mit mehreren, über einen Winkel miteinander verbundenen einzelnen plattenförmigen Kalibrierstruktur-Trägerkomponenten wird nachfolgend auch als Falttarget bezeichnet.

Diese jeweiligen Kalibrierstruktur-Trägerkomponenten können tiefengestaffelte Punkte (vgl. die Rasterpunkte 92) als Kalibrierstrukturen aufweisen. Hierüber ist eine robuste Schätzung der freien, also nicht gefangenen Freiheitsgrade der jeweiligen Anordnung der Platten-Targets möglich.

Alternativ können die beiden miteinander verbundenen Kalibrierstruktur-Trägerkomponenten eines derartigen Platten-Targets (Falttarget) einen frei vorgebbaren Winkel zueinander haben.

Figur 14 verdeutlicht zudem noch einen optimalen Betrachtungswinkel einer Kamera, wobei es sich um eine der vorstehend beschriebenen Kameras 2, 7 bis 10, 30, 42 bis 44 handeln kann, am Beispiel der Kamera 42, relativ zur Anordnung des Platten-Targets 93. Ein derartiger optimaler Betrachtungswinkel liegt vor, wenn eine Bildaufnahmerichtung der Kamera 42 längs einer Winkelhalbierenden eines Winkels verläuft, der von den beiden Normalen N der Kalibriertafel 90 des Platten-Targets 93 aufgespannt wird.

Ein derartiges, aus mehreren verbundenen Kalibrierstruktur-Trägerkomponenten aufgebautes Platten-Target kann auch mehr als zwei derartige Platten, also mehr als zwei Kalibrierstruktur-Trägerkomponenten, aufweisen, sodass eine entsprechend größere Anzahl von relativen Winkeln der einzelnen Kalibrierstruktur-Trägerkomponenten zueinander resultiert.

Eine plattenförmige Kalibrierstruktur -Trägerkomponente eines solchen Falttargets kann eben auf einer Bodenstruktur liegen, was die Anzahl der zu bestimmenden/zu schätzenden Freiheitsgrade für das gesamte, verbundene Platten-Target verringert.

Die Kalibrierstruktur-Trägerkomponente 46 bis 49 können alternativ würfelförmig aufgebaut sein. Dieselbe Kalibrierstruktur-Trägerkomponente 46 bis 49 kann dann von zwei Seiten mit zwei der Kameras des Systems 41 mit optimalem Betrachtungswinkel betrachtet werden. Für den optimalen Betrachtungswinkel gilt wiederum, was vorstehend im Zusammenhang mit der Figur 14 erläutert wurde.

Ein derartiger Würfel 97 (vgl. Fig. 15) kann flach auf der Bodenstruktur angeordnet sein.

Ein derartiger Würfel kann längs einer der Koordinaten und insbesondere längs einer vorgegebenen Koordinate (x=x₀ oder y=y₀) entlang angeordnet sein.

Bei einer alternativen Ausführung der Kalibrierstruktur-Trägerkomponenten sind diese "fliegend", also beweglich ausgeführt. Diese ermöglicht es, sehr viele Aufnahmen von derartigen Kalibrierstruktur-Trägerkomponenten durchzuführen, die sich jeweils an verschiedenen Positionen befinden. Die Kameras 42 bis 44 sind bei Verwendung derartiger fliegender Targets fest angeordnet und nehmen Bildsequenzen von mindestens einem derartigen fliegenden Target auf.

Die notwendige Größe eines Targets ergibt sich aus der Entfernung zur Kamera und der Auflösung der Kamera. Sind die Kameras sehr weit über Grund (z.B. 50m auf einem Kran), muss entweder das Target sehr groß sein, oder die Targets werden mit Drohnen in die Nähe der Kameras geflogen.

Soweit die Kalibrierstruktur-Trägerkomponenten als Würfel ausgeführt sind, kann zugelassen sein, dass sich beim Einsatz solcher Kalibrierstruktur-Trägerkomponenten als fliegende Targets der jeweilige Würfel sich während des Flugs dreht.

Die Kalibrierstruktur-Trägerkomponenten nach Art der Trägerkomponenten 46 bis 49 können alternativ oder zusätzlich mehrere Spektralkanäle bedienen, können sich also in einem vorgegebenen Spektralbereich anders verhalten als in einem anderen vorgegebenen Spektralbereich. Beispielsweise kann eine derartige multispektrale Kalibrierstruktur-Trägerkomponente, die auch als multispektrales Target bezeichnet wird, Kalibrierstrukturen in verschiedenen Farben aufweisen, die sich voneinander unterscheiden. Dies ermöglicht beispielsweise eine gleichzeitige Kalibrierung von in gleicher Weise ausgeführten Kameras, die für unterschiedliche Spektralbereiche sensitiv sind, also beispielsweise einerseits von RGB-Kameras und andererseits IR-Kameras.

Für den Fall, dass die hinsichtlich ihrer Relativposition zu bestimmenden Kamera 42 bis 44 von den Kalibrierstruktur-Trägerkomponenten sehr weit entfernt sind, können die Kalibrierstruktur-Trägerkomponenten nach Art der Trägerkomponenten 46 bis 49 alternativ auch als Einzelpunkte (Single-Dots) ausgestaltet sein. Bei der relativen Positionsbestimmung wird in diesem Fall dann eine Größe der jeweiligen Einzelpunkte nicht verwendet, sondern lediglich die Lage eines Einzelpunkt-Zentrums im Raum.

Derartige Single-Dot-Targets können auf einer Ebene angeordnet sein.

Die Single-Dot-Targets können in Form eines rotationsinvarianten Musters verteilt angeordnet sein.

Eine Skalierungsinformation bei Einsatz derartiger Single-Dot-Targets kann über eine Baseline-Länge der Kameras und eine entsprechende Triangulation gewonnen werden.

Ein Abstand des jeweiligen Single-Dot-Targets zur jeweiligen Kamera 42 bis 45 kann auch mithilfe eines Laserrangefinders, also einer Laser-Abstandsmesseinrichtung bzw. -Abstandssensors ermittelt werden.

Bei der Verwendung von Single-Dot-Targets kann die Anordnung auch so sein, dass ein Abstand von zwei Dots bekannt ist.

Über ein Muster einer Anordnung einer Mehrzahl derartiger Single-Dots kann eine Hauptrichtung definiert werden. Dies kann wiederum zur Einengung der zu bestimmenden/zu schätzenden Freiheitsgrade genutzt werden.

Ein Target kann aus Texturelementen bestehen, aus denen eine eindeutige Zuordnung des Targets in unterschiedlichen Kameras gewonnen wird, ggfs. eine Skalierungsinformation soweit sonst nicht vorhanden (Basisabstand der Kameras, Abstand Kamera zu Target), und zur Erhöhung der Genauigkeit weitere eindeutig zuordnungsbare Merkmale. Der Filter-Algorithmus kann die Relativlage von Kameras aus zugeordneten Merkmalen eindeutig ermitteln und somit auch die initiale Kalibrierung unterstützen.

Der Einsatz von Single-Dot-Targets kann auch zur Ermittlung einer ebenen Ausrichtung genutzt werden.

Ein Target kann aus manuell verteilten Tafeln beispielsweise mit einem großen Punkt zusammengesetzt werden. Die Tafeln können in beliebigen Abständen idealerweise in eindeutiger Anordnung auf einem ebenen Boden verteilt und über Laserrangefinder vermessen werden und dienen somit als (zusammengesetztes) Target.

Anstelle spezifischer Kalibrierstruktur-Trägerkomponenten können auch Key Features zum Einsatz kommen. Entsprechende Key Features sind diskutiert im Fachartikel "Image Matching Using SIFT, SURF, BRIEF and ORB: Perfomence Comparison For Distorted Images" von E.Karami et al., arXiv: 17010.02726. Es handelt sich hierbei um Merkmale, die mit unterschiedlichen Kameras, die ein vergleichbares Objektiv haben, aus unterschiedlicher Lage gefunden und zugeordnet werden können.

Hiermit kann der Abstand der Kameras 42 bis 44 zueinander und/oder der Abstand der jeweiligen Kameras 42 bis 44 zumindest einen der Key Features herangezogen werden.

Bei der Positionsbestimmung der Kamera-Eintrittspupillen sind verschiedene Relativbewegungen und Ausrichtungsvarianten möglich:
Der Tragrahmen 45 kann sich nach Art eines Fahrzeugs bewegen, wobei die Kameras 42 bis 44 relativ zueinander fest angeordnet bleiben.

Die Targets können insbesondere entlang einer Fertigungslinie angeordnet sein, beispielsweise entlang eines Fertigungs-Fließbands. Hierbei können alle für den jeweiligen Fließband-Verlauf relevanten Betrachtungsrichtungen berücksichtigt werden.

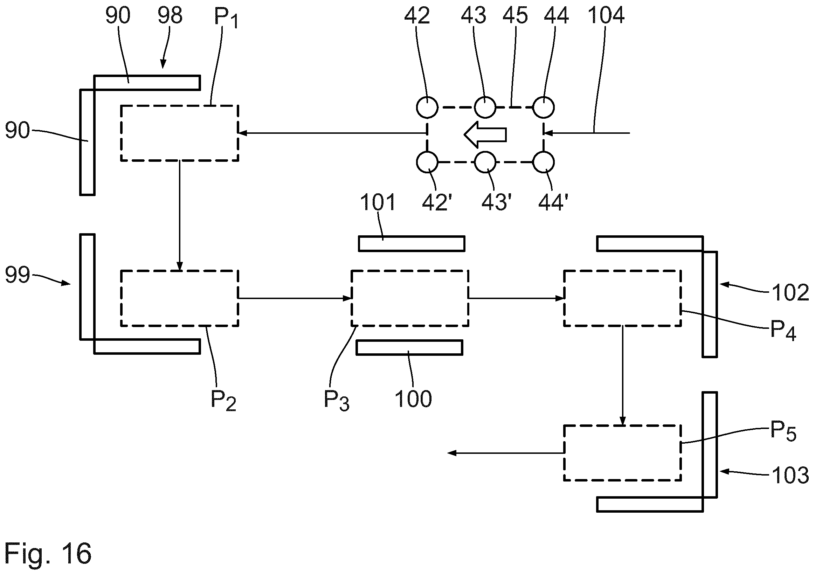

Figur 16 zeigt ein Beispiel einer solchen Anordnung von Platten-Targets 98 bis 103, die entlang einer Fertigungslinie 104 angeordnet sind.

Die Platten-Targets 99, 102 und 103 sind entsprechend dem Platten-Target 93 ausgeführt.

Bei den Platten-Targets 100, 101 handelt es sich um einzelne Kalibriertafeln beispielsweise nach Art der Kalibriertafel 90.

Der Tragrahmen 45 in Form eines Fahrgestells trägt sechs Kameras 42 bis 44, 42' bis 44', deren Relativpositionen zueinander, insbesondere deren Eintrittspupillen-Zentren-Positionen relativ zueinander bestimmt werden sollen.

Figur 16 zeigt insgesamt fünf hintereinander vom Tragrahmen 45 eingenommene Fertigungslinien-Positionen P₁ bis P₅.

In der Position P₁ wird das Platten-Target 98, aufweisend zwei Kalibriertafeln 90 mit Faltwinkel 90° zueinander, zur Positionsbestimmung der Kamera 42 (in der Figur 16 links oben am Tragrahmen 45) eingesetzt.

In der nachfolgenden Position P₂ wird das dieser Position P₃ wiederum zugeordnete Platten-Target 99 zur Positionsbestimmung der Kamera 42' (in der Figur 16 links unten am Tragrahmen 45) eingesetzt.

In der nachfolgenden Position P₃ werden die Platten-Targets 100, 101 zur Positionsbestimmung der Kameras 43' (in der Figur 16 unten mittig am Tragrahmen 45) und 43 (in der Figur 16 oben mittig am Tragrahmen 45) eingesetzt.

In der Position P₄ wird das Platten-Target 102 zur Positionsbestimmung der Kamera 44 (in der Figur 16 rechts oben am Tragrahmen 45) eingesetzt.

In der nachfolgenden Position P₅ wird das Platten-Target 103 zur Positionsbestimmung der Kamera 44' (in der Figur 16 rechts unten am Tragrahmen 45) eingesetzt.

Nach Durchlaufen der Positionen P₁ bis P₅ sind die Positionen aller sechs Kameras 42 bis 44, 42' bis 44' auf dem Tragrahmen 45 bestimmt und damit auch die Relativpositionen dieser Kameras zueinander.

Zusätzlich können auch auf der jeweiligen Bodenstruktur angeordnete Boden-Targets verwendet werden, was, wie vorstehend bereits erläutert, die Anzahl der zu bestimmenden/zu schätzenden Freiheitsgrade reduziert.

Eine Ausrichtung der Targets kann anhand nominaler, also vorab definierter Anordnungen erfolgen, die beispielsweise auf CAD-Daten einer Grundstruktur, innerhalb der die Targets untergebracht sind, bekannt sind.

Eine Ausrichtung kann an folgenden Strukturen erfolgen:
- an hinsichtlich ihrer Lage nominal bestimmten, festen Kameras;
- an hinsichtlich ihrer Lage vorgegebenen, nominalen, festen Targets;
- an den nominalen, festen Kameras und Targets;
- an ausgewählten Targets;
- an ausgewählten Kameras;
- an Linear-Bewegungen von Targets;
- an Linear-Bewegung des Fahrzeugs (Fertigungslinie).

Mithilfe des Systems 41 kann neben einer extrinsischen Kalibrierung auch eine intrinsische Kamera-Kalibrierung durchgeführt werden. Dies kann, soweit die Kameras 42 bis 44 beispielsweise zu einem zu fertigenden Fahrzeug gehören, innerhalb einer Kraftfahrzeug-Fertigungslinie erfolgen. In diesem Fall kann die intrinsische Kamera-Kalibrierung ohne Verwendung einer Kalibrier-Vorrichtung entsprechend derjenigen erfolgen, die vorstehend unter Bezugnahme auf die Figuren 1 bis 4 erläutert wurde. Bei der Verwendung des Systems 41 zur intrinsischen Kamera-Kalibrierung wird das Fahrzeug im aktuellen Fertigungszustand vor einer dichten Anordnung von Targets entsprechend den vorstehend erläuterten Kalibrierstrukturen gestoppt und es wird ein CAP-Grid, also eine der Haupt-Kalibrierflächen nach Art der Kalibrierflächen 15 bis 17, vermessen.

Ein Roboter 1 führt ein AUX-Grid, also eine der Zusatz-Kalibrierflächen, nach Art der Kalibrierflächen 22 bis 24, zeitweise vor die Kameras 42 bis 44, 42' bis 44'.

Ein Roboter 2 führt eine zusätzliche, bewegliche Referenzkamera nach Art der Referenzkamera 30 der vorstehend beschriebenen Kalibrier-Vorrichtung 1 zur Betrachtung der CAP-Grids und/oder der AUX-Grids.

Zur Kalibrierung müssen das CAP-Grid einerseits und das AUX-Grid andererseits aus mindestens einer Kameraposition der Kameras 42 bis 44, 42' bis 44' heraus vermessen werden und anschließend aus einer zweiten Kameraposition der Kameras 42 bis 44, 42' bis 44' heraus.

Eine Positioniersequenz kann beispielsweise sein: In der ersten Kameraposition wird das CAP-Grid vermessen. Anschließend führt der Roboter 1 das AUX-Grid zu. Anschließend wird das AUX-Grid in der ersten Kameraposition vermessen. Der Roboter 2 bewegt dann die Kamera von der ersten Kameraposition in die zweite Kameraposition. Anschließend wird das AUX-Grid in der zweiten Kameraposition vermessen. Der Roboter 1 führt dann das AUX-Grid weg und in der zweiten Kameraposition wird das CAP-Grid vermessen.

Auch mehrere Kameras können auf dem Roboter 2 montiert sein.

Bei einer derartigen intrinsischen Kalibrierung mittels des Systems 41 können mehrere Stopps des Trägers 45, also des zu fertigenden Fahrzeugs, an mehreren geeigneten Positionen innerhalb der Fertigungslinie vorgenommen werden.

Das System 41 kann mehrere bewegliche Referenzkameras aufweisen. Diese Referenzkameras können die CAP-Grids und/oder die AUX-Grids aus mindestens zwei Richtungen betrachten.

Die bewegliche Referenzkamera wird zur Kalibrierung der Haupt-Kalibrierflächen entsprechend dem genutzt, was vorstehend im Zusammenhang mit der Kalibrier-Vorrichtung erläutert wurde.

Eine Mehrzahl zu kalibrierender Kameras, insbesondere ein auf einem gemeinsamen Kameraträger montiertes Kamerabündel kann mithilfe des vorstehend beschriebenen Verfahrens zur intrinsischen Kalibrierung und auch mithilfe des vorstehend beschriebenen Verfahrens zur extrinsischen Kamera-Kalibrierung gemeinsam kalibriert werden.

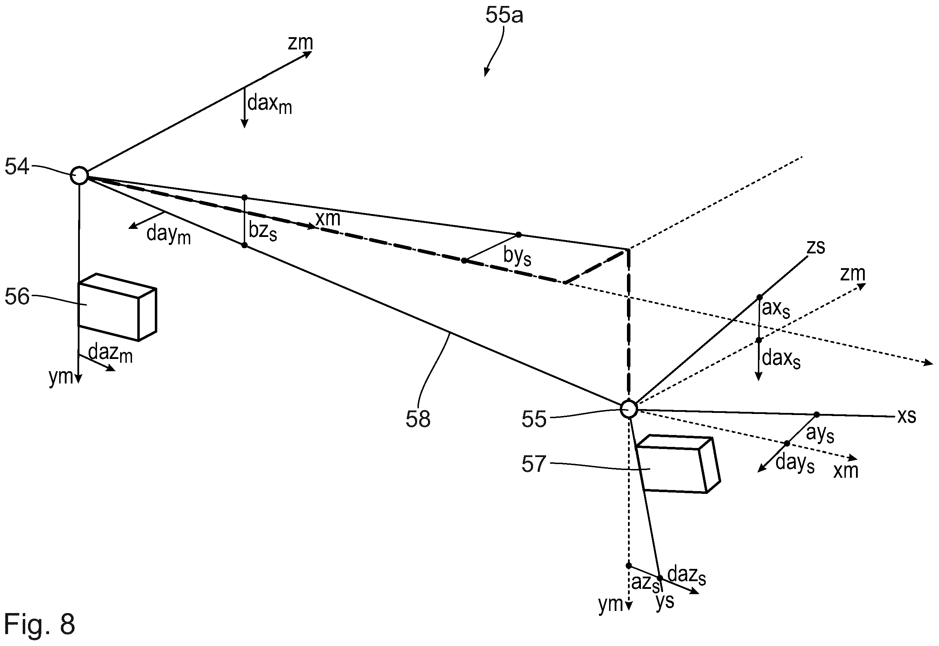

Anhand der Figuren 8 bis 10 wird nachfolgend ein Verfahren zur räumlichen Bilderfassung mit Hilfe einer zwei Kameras 54, 55 aufweisenden Stereokamera 55a beschrieben. Diese Kameras 54 bis 55 können einen Vorbereitungsschritt mit Hilfe der Kalibrier-Vorrichtung 1 kalibriert worden und auch hinsichtlich ihrer Relativposition mit Hilfe des Systems 41 vermessen worden sein.

Die in der Figur 8 links dargestellte Kamera 54 wird als Master-Kamera zur Definition eines Master-Koordinatensystems xm, ym und zm herangezogen. zm ist hierbei die Bildaufnahmerichtung der Master-Kamera 54. Die zweite, in der Figur 8 rechts dargestellte Kamera 55 ist dann die Slave-Kamera.

Die Master-Kamera 54 ist mit einer inertialen Master-Messeinheit 56 (IMU) fest verbunden, die als Drehratensensor, insbesondere in Form eines mikro-elektro-mechanischen Systems (MEMS) ausgebildet sein kann. Die Master-Messeinheit 56 misst Winkeländerungen eines Nickwinkels daxₘ, eines Gierwinkels dayₘ sowie eines Rollwinkels dazₘ der Master-Kamera 54 und erlaubt somit, in Echtzeit Lageänderungen des Master-Koordinatensystems xm, ym, zm zu überwachen. Eine Zeitkonstante dieser Echtzeit-Lageänderungs-Erfassung kann besser sein als 500 ms, kann besser sein als 200 ms und kann auch besser sein als 100 ms.

Auch die Slave-Kamera 55 ist mit einer zugehörigen inertialen Slave-Messeinheit 57 fest verbunden, über die Winkeländerungen eines Nickwinkels daxₛ, eines Gierwinkels dayₛ und eines Rollwinkels dazₛ der Slave-Kamera 55 in Echtzeit erfasst werden können, sodass relative Änderungen des Slave-Koordinatensystems xs, ys, zs zum Master-Koordinatensystem xm, ym, zm wiederum jeweils in Echtzeit erfasst werden können. Relativbewegungen der Kameras 54, 55 der Stereokamera 55a zueinander können in Echtzeit über die Messeinheiten 56, 57 erfasst und in das räumliche Bilderfassungsverfahren einbezogen werden. Die Messeinheiten 56, 57 können zur Vorhersage einer Relativlageänderung der Kameras 54, 55 zueinander genutzt werden. Eine im Rahmen der räumlichen Bilderfassung erfolgende Bildverarbeitung kann diese Relativlagevorhersage dann noch verbessern. Selbst dann, wenn beispielsweise aufgrund einer Bewegung eines Tragrahmens, auf dem die Stereokamera 54a untergebracht ist, auf unebenem Untergrund, sich die Kameras 54, 55 laufend gegeneinander bewegen, ergibt sich dennoch ein stabiles Ergebnis der räumlichen Bilderfassung.

Eine Verbindunglinie zwischen den Zentren der Eintrittspupillen der Kameras 54, 55 ist in der Figur 8 mit 58 bezeichnet und stellt die Baseline der Stereokamera 55a dar.

Beim Verfahren zur räumlichen Bilderfassung werden folgende Winkel erfasst, die für die Lagebeziehung der Slave-Kamera 55 zur Master-Kamera 54 relevant sind:
- der Winkel byₛ, also eine Verkippung einer auf der Ebene xmzm senkrecht stehenden Ebene, durch die die Baseline 58 verläuft, zur Ebene xmym um die Kippachse ym;
- bzₛ: eine der Verkippung byₛ entsprechende Verkippung der Baseline 58 zur Ebene xmzm um eine zur Slave-Koordinatenachse zs parallele Kippachse;
- axₛ: eine Verkippung der Slave-Koordinatenachse zs, also der Bildaufnahmerichtung der Slave-Kamera 55, zur Ebene xmzm um die Slave-Koordinatenachse xs;
- ayₛ: eine der Verkippung axₛ entsprechende Verkippung der Slave-Koordinatenachse xs relativ zur Master-Ebene xmym um die Slave-Koordinatenachse ys sowie
- azₛ: eine den Verkippungen axₛ, ayₛ entsprechende Verkippung der Slave-Koordinatenachse ys zur Master-Koordinatenebene ymzm um die Slave-Koordinatenachse zs.

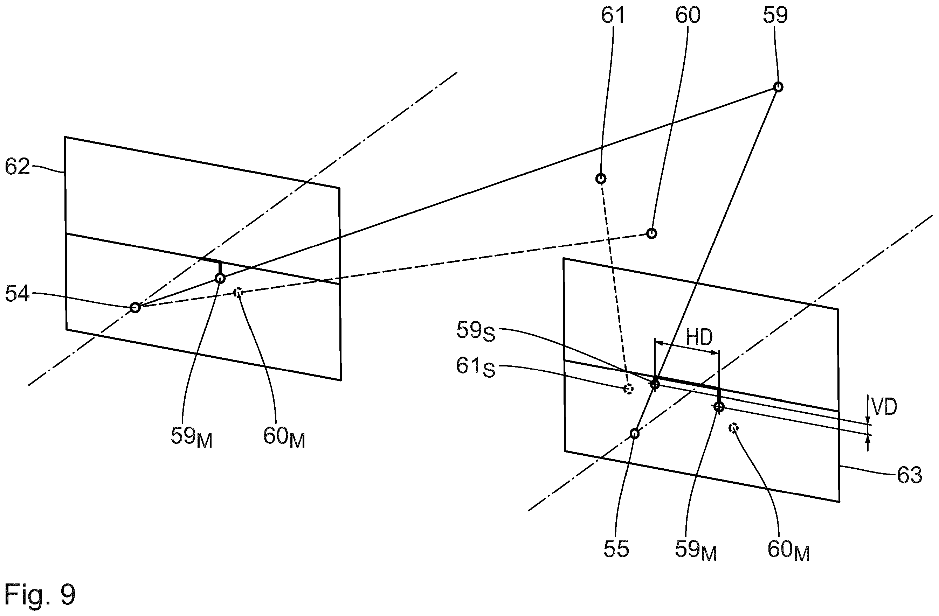

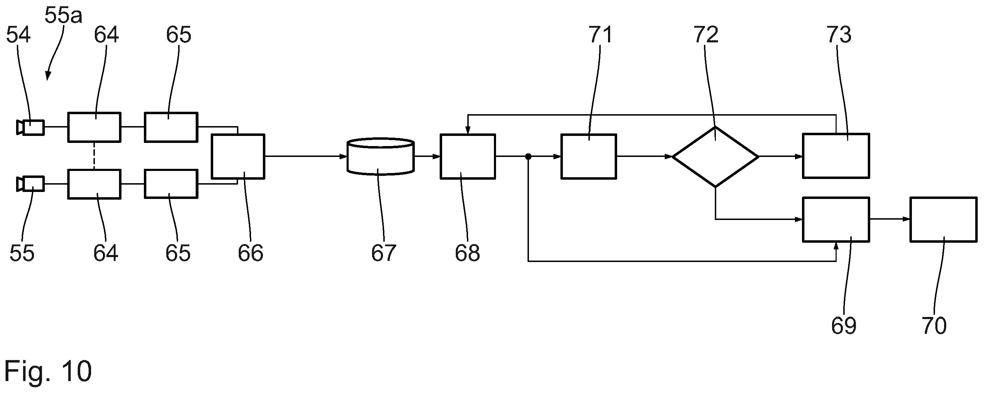

Bei der räumlichen Bilderfassung mit Hilfe der beiden Kameras 54, 55 unter Berücksichtigung einerseits dieser Winkel byₛ, bzₛ, axₛ, ayₛ, azₛ einschließlich der mit den Messeinheiten 56, 57 erfassten Winkeländerungen daxₘ, dayₘ, dazₘ, daxₛ, dayₛ, dazₛ wird folgendermaßen vorgegangen:
Zunächst wird ein Bild einer räumlichen Szenerie mit Szenerie-Objekten 59, 60, 61 (vgl. Figur 9) gleichzeitig mit den beiden Kameras 54, 55 der Stereokamera erfasst. Diese Bilderfassung der Bilder 62, 63 geschieht für beide Kameras 54, 55 gleichzeitig in einem Erfassungsschritt 64 (vgl. Figur 10).

Dargestellt ist in der Figur 9 schematisch das jeweilige Bild 62, 63 der Kameras 54 und 55.

Die Abbildung des Szenerie-Objekts 59 ist im Bild 62 der Master-Kamera 54 bei 59_{M} dargestellt, die Abbildung des Szenerie-Objekts 60 bei 60_{M}.

Die Abbildung des Szenerie-Objekts 59 ist im Bild 63 der Slave-Kamera 55 bei 59_{S} dargestellt. Die Abbildung des Szenerie-Objekts 61 ist im Bild 63 der Slave-Kamera 55 bei 61_{S}dargestellt. Zudem finden sich im Bild 63 der Slave-Kamera 55 auch an den entsprechenden x, y-Koordinaten des Bildframes die Abbildungen 59_{M}, 60_{M} der Master-Kamera 54.

Eine y-Abweichung der Abbildungs-Positionen 59_{M}, 59_{S} wird als zur Epipolarlinie der jeweiligen Kamera senkrechte Disparität bzw. als vertikale Disparität VD bezeichnet. Entsprechend wird eine x-Abweichung der Abbildungs-Positionen 59_{M}, 59_{S} des Szenerie-Objekts 59 als Disparität längs der Epipolarlinie bzw. als horizontale Disparität HD bezeichnet. Hierzu wird auf die bekannte Terminologie zur Epipolargeometrie verwiesen. Der Parameter "Zentrum der Kamera-Eintrittspupille" wird in dieser Terminologie als "Projektionszentrum" bezeichnet.

Die beiden Abbildungen 60_{M}, 61_{S} zeigen in den Bildern 62, 63 die gleiche Signatur, werden also mit dem gleichen Abbildungsmuster in den Bildern 62, 63 dargestellt, stammen aber tatsächlich von den beiden innerhalb der räumlichen Szenerie unterschiedlichen Szenerie-Objekten 60 und 61.

Die charakteristischen Signaturen der Szenerie-Objekte 59 bis 61 in den Bildern werden nun in einem Ermittlungsschritt 65 (vgl. Figur 10) für jede der beiden Kameras 54, 55 getrennt ermittelt.

Die im Schritt 65 ermittelten Signaturen werden in einer Signaturliste jeweils zusammengefasst und in einem Zuordnungsschritt 66 erfolgt ein paarweises Zuordnen der im Schritt 65 ermittelten Signaturen der erfassten Bilder 62, 63. Gleiche Signaturen werden also hinsichtlich der erfassten Szenerie-Objekte einander zugeordnet.

Je nach erfasster räumlicher Szenerie kann sich als Ergebnis des Zuordnungsschritts 66 eine sehr hohe Anzahl zugeordneter Signaturen ergeben, beispielsweise mehrere zehntausend zugeordnete Signaturen und entsprechend mehrere zehntausend ermittelte charakteristische Lageabweichungen.

In einem weiteren Ermittlungsschritt 67 werden nun charakteristische Lageabweichungen der zugeordneten Signatur-Paare voneinander ermittelt, also beispielsweise die vertikalen und horizontalen Disparitäten VD, HD.

Beispielsweise die jeweils ermittelte vertikale Disparität VD wird für alle zugeordneten Signatur-Paare quadratisch aufsummiert. Durch Variation der vorstehend im Zusammenhang mit der Figur 8 beschriebenen Winkelparameter byₛ, bzₛ, axₛ, ayₛ, azₛ kann dann eine Minimierung dieser Quadratsumme erfolgen. Diese Quadratsumme hängt von diesen, vorstehend im Zusammenhang mit der Figur 8 erläuterten Winkeln ab.

In einem nachfolgenden Filterungsschritt 68 werden dann die ermittelten Lageabweichungen zur Auswahl zugeordneter Signatur-Paare gefiltert, die mit höherer Wahrscheinlichkeit zum gleichen Szenerie-Objekt 59 bis 61 gehören, unter Einsatz eines Filteralgorithmus. Die einfachste Variante eines solchen Filteralgorithmus ist eine Auswahl durch Vergleich mit einem vorgegebenen Toleranzwert, wobei nur diejenigen Signatur-Paare den Filter passieren, bei denen die Quadratsumme kleiner ist als der Vorgabe-Toleranzwert. Dieser Vorgabe-Toleranzwert kann beispielweise so lange erhöht werden, bis als Ergebnis des Filterns die Anzahl ausgewählter Signatur-Paare kleiner ist als ein vorgegebener Grenzwert.

Sobald als Ergebnis des Filterns eine Anzahl ausgewählter Signatur-Paare kleiner ist als ein vorgegebener Grenzwert, beispielsweise kleiner als ein Zehntel der ursprünglich paarweise zugeordneten Signaturen oder absolut beispielsweise kleiner ist als fünftausend Signatur-Paare, erfolgt in einem Schritt 69 eine Triangulations-Berechnung zur Ermittlung von Tiefendaten für die jeweiligen Szenerie-Objekte 59 bis 61. Neben der Anzahl ausgewählter Signatur-Paare kann als Abbruchkriterium auch ein Vorgabe-Toleranzwert für die Quadratsumme charakteristischer Lageabweichungen der zugeordneten Signatur-Paare, zum Beispiel der vertikalen Disparität VD, dienen, entsprechend dem, was vorstehend erläutert wurde. Auch eine Standardabweichung der charakteristischen Lageabweichung, beispielsweise der vertikalen Disparität VD, kann als Abbruchkriterium herangezogen werden.

Als Ergebnis dieser Triangulations-Berechnung kann in einem Erstellungs-und Ausgabeschritt 70 eine 3D-Datenkarte der erfassten Szenerie-Objekte 59 bis 61 innerhalb des erfassten Bildes der räumlichen Szenerie als Ergebnis erstellt und ausgegeben werden.

Soweit sich beim Filterschritt 68 ergibt, dass die Anzahl der ausgewählten Signatur-Paare noch größer ist als der vorgegebene Grenzwert, erfolgt zunächst in einem Ermittlungsschritt 71 ein Ermitteln von Winkelkorrekturwerten zwischen den verschiedenen ausgewählten zugordneten Signatur-Paaren zur Prüfung, ob abgebildete Roh-Objekte, die zu den verschiedenen ausgewählten zugeordneten Signatur-Paaren gehören, innerhalb der räumlichen Szenerie lagerichtig zueinander angeordnet werden können. Hierzu werden die vorstehend im Zusammenhang mit der Figur 8 beschriebenen Winkel herangezogen, wobei aufgrund der Messüberwachung über die Messeinheiten 56, 57 diese Winkel in Echtzeit korrigiert vorliegen.

Aufgrund einer im Ermittlungsschritt 71 erfolgenden Ausgleichsberechnung lassen sich dann beispielsweise die Szenerie-Objekte 60, 61 trotz ihrer identischen Signaturen 60_{M}, 61_{S} in den Bildern 62, 63 voneinander unterscheiden, sodass ein entsprechend zugeordnetes Signatur-Paar als Fehlzuordnung ausgesondert werden kann, sodass die Anzahl der ausgewählten Signatur-Paare sich entsprechend verringert.

Nach erfolgter Winkelkorrektur wird in einem Vergleichsschritt 72 ein Vergleich der jeweils für die Signatur-Paare ermittelten Winkelkorrekturwerte mit einer vorgegebenen Korrekturwert-Größe durchgeführt. Soweit die Winkelwerte der Signatur-Paare als Ergebnis des Vergleichsschritts 72 stärker voneinander abweichen als die vorgegebene Korrekturwert-Größe wird in einem Anpassungsschritt 73 der Filteralgorithmus, der im Filterschritt 68 zum Einsatz kommt, so angepasst, dass sich nach dem Filtern mit dem angepassten Filteralgorithmus eine Anzahl ausgewählter Signatur-Paare ergibt, die kleiner ist als die Anzahl, die sich beim vorhergehenden Filterschritt 68 ergeben hat. Diese Anpassung kann dadurch erfolgen, dass Signatur-Paare ausgeschieden werden, die sich in ihren Disparitäten um mehr als ein vorgegebener Grenzwert unterscheiden. Auch ein Vergleichsmaßstab, ab wann die Signaturen eines potentiellen Signatur-Paares als gleich und damit zuordenbar beurteilt werden, kann bei der Anpassung 73 kritischer eingestellt werden.

Diese Abfolge der Schritte 73, 68, 71 und 72 wird dann so lange durchgeführt, bis sich ergibt, dass die Winkelkorrekturwerte der verbleibenden zugeordneten Signatur-Paare höchstens so weit voneinander abweichen wie die vorgegebene Korrekturwert-Größe. Es erfolgt dann wiederum die Triangulationsberechnung im Schritt 69, wobei hierbei die Winkelkorrekturwerte der ausgewählten Signatur-Paare einbezogen werden können, und das Erstellen und Ausgeben der erhaltenen Ergebnisse insbesondere in Form wiederum einer 3D-Datenkarte.

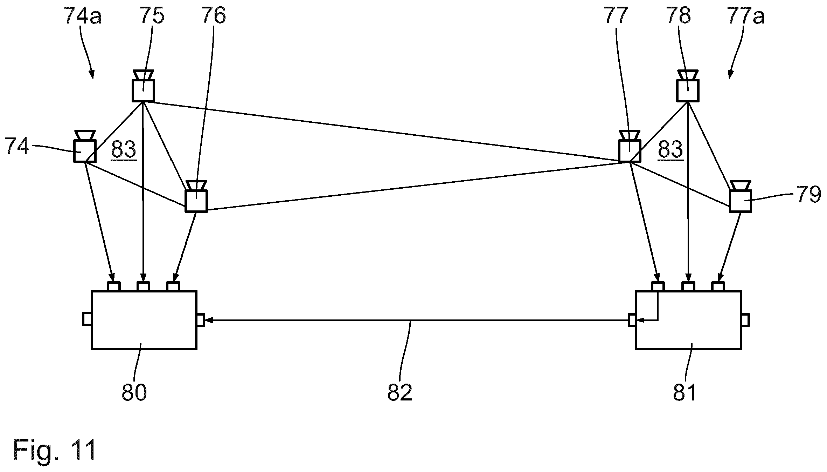

Anhand der Figur 11 wird nachfolgend ein Verfahren zur Erzeugung einer redundanten Abbildung eines Messobjekts erläutert. Hierzu werden mehrere Kameras miteinander verknüpft, deren Eintrittspupillen-Zentren eine Kamera-Anordnungsebene definieren. Figur 11 zeigt hierzu zwei Gruppen zu je drei Kameras 74 bis 76 einerseits (Gruppe 74a) und 77, 78, 79 andererseits (Gruppe 77a). Die Gruppen 74a einerseits und 77a andererseits haben jeweils eine zugeordnete Datenverarbeitungseinheit 80, 81 zur Verarbeitung und Auswertung der von den zugehörigen Kameras erfassten Bilddaten. Die beiden Datenverarbeitungseinheiten 80, 81 stehen über eine Signalleitung 82 miteinander in Signalverbindung.

Zur Erfassung einer räumlichen Szenerie können beispielsweise die Kameras 74 bis 76 der Gruppe 74a miteinander zusammengeschalten werden, sodass, beispielsweise über ein Bilderfassungsverfahren, das vorstehend im Zusammenhang mit den Figuren 8 bis 10 erläutert wurde, eine 3D-Erfassung dieser räumlichen Szenerie ermöglicht ist. Zur Erschaffung einer zusätzlichen Redundanz dieser räumlichen Bilderfassung kann das Bilderfassungsergebnis beispielsweise der Kamera 77 der weiteren Gruppe 77a herangezogen werden, welches der Datenverarbeitungseinheit 80 der Gruppe 74a über die Datenverarbeitungseinheit 81 der Gruppe 77a und die Signalleitung 82 zur Verfügung gestellt wird. Aufgrund der räumlichen Entfernung der Kamera 77 zu den Kameras 74 bis 76 der Gruppe 74a ergibt sich ein bei der Abbildung der räumlichen Szenerie deutlich anderer Blickwinkel, was die Redundanz der räumlichen Bilderfassung verbessert.

Eine Kamera-Anordnungsebene 83 die von den Kameras 74 bis 76 der Gruppe 74a bzw. den Kameras 77 bis 79 der Gruppe 77a definiert ist, ist in der Figur 11 schematisch angedeutet und liegt unter einem Winkel zur Zeichenebene der Figur 11.

Eine räumliche Bilderfassung mit Hilfe der Kameras genau einer Gruppe 74a, 77a wird auch als Intra-Bilderfassung bezeichnet. Eine räumliche Bilderfassung unter Einbeziehung der Kameras von mindestens zwei Gruppen wird auch als Inter-Bilderfassung bezeichnet.

Eine Triangulation kann beispielsweise mit den Stereo-Anordnungen der Kameras 78, 79, der Kameras 79, 77 und der Kameras 77, 78 jeweils unabhängig erfolgen. Die Triangulationspunkte dieser drei Anordnungen müssen jeweils übereinstimmen.

Eine Kamera-Gruppe nach Art der Gruppen 74a, 77a kann in Form eines Dreiecks, insbesondere in Form eines gleichschenkligen Dreiecks angeordnet sein. Auch eine Anordnung von sechs Kameras in Form eines Hexagons ist möglich.

Im Vergleich zum Abstand zwischen den Kameras einer Gruppe 74a, 77a sind die Kameras der jeweils anderen Gruppe um mindestens einen Faktor 2 weiter entfernt. Ein Abstand zwischen den Kameras 76 und 77 beträgt also mindestens das Doppelte des Abstandes zwischen den Kameras 75 und 76 bzw. den Kameras 74 und 76. Dieser Abstandsfaktor kann auch größer sein und kann beispielsweise größer sein als 3, kann größer sein als 4, kann größer sein als 5 und kann auch größer sein als 10. Ein durch die jeweilige Gruppe 74a, 77a abgedeckter Kamera-Nahbereich kann beispielsweise im Bereich zwischen 80 cm und 2,5 m liegen. Über die Hinzunahme mindestens einer Kamera der jeweils anderen Gruppe kann dann über die Nahbereichs-Grenze hinaus auch ein Fernbereich mit der Bilderfassungs-Vorrichtung erfasst werden.

## Patentansprüche

1. Vorrichtung (1) zum Kalibrieren einer räumlichen Lage eines Zentrums einer Eintrittspupille einer Kamera (2),
- mit einer Halterung (4) zum Halten der Kamera (2) derart, dass diese ein vorgegebenes Kalibrier-Sichtfeld (5) erfasst,
- mit mindestens zwei stationären Referenzkameras (7 bis 10) zur Aufnahme des Kalibrier-Sichtfeldes (5) aus unterschiedlichen Richtungen (11 bis 14),
- mit mindestens einer stationären Haupt-Kalibrierfläche (15 bis 17), die stationäre Haupt-Kalibrierstrukturen (18 bis 21) aufweist, die im Kalibrier-Sichtfeld (5) angeordnet ist, **gekennzeichnet durch**
- mit mindestens einer Zusatz-Kalibrierfläche (22 bis 24), die Zusatz-Kalibrierstrukturen (25) aufweist, die zwischen
-- einer Neutralposition, in der die Zusatz-Kalibrierfläche (22 bis 24) außerhalb des Sichtfeldes (5) angeordnet ist, und
-- einer Betriebsposition, in der die Zusatz-Kalibrierfläche (22 bis 24) im Sichtfeld (5) angeordnet ist, angetrieben über einen Kalibrierflächen-Verlagerungsantrieb (27) verlagerbar ist,
- mit einer Auswerteeinheit (29) zur Verarbeitung von aufgenommenen Kameradaten der zu kalibrierenden Kamera (2) und der Referenzkameras (7 bis 10) und von Zustandsparametern der Vorrichtung (1).

2. Vorrichtung nach Anspruch 1, **gekennzeichnet durch** mindestens eine weitere, zur Halterung (4) bewegliche Referenzkamera (30) zur Aufnahme des Kalibrier-Sichtfeldes (5), die zwischen
- einer ersten Sichtfeld-Aufnahmeposition und
- mindestens einer weiteren Sichtfeld-Aufnahmeposition, die sich von der ersten Sichtfeld-Aufnahmeposition in einer Bildaufnahmerichtung (32) unterscheidet, angetrieben über einen Kamera-Verlagerungsantrieb (31) verlagerbar ist.

3. Vorrichtung nach Anspruch 1 oder 2, **dadurch gekennzeichnet, dass** die Zusatz-Kalibrierstrukturen (25) der jeweiligen Zusatz-Kalibrierfläche (22 bis 24) in einer von einer ebenen Fläche abweichenden 3D-Anordnung vorliegen.

4. Vorrichtung nach einem der Ansprüche 1 bis 3, **dadurch gekennzeichnet, dass** die Haupt-Kalibrierstrukturen (18 bis 21) in einer Haupt-Kalibrierstruktur-Hauptebene (xy) und zusätzlich in einer Haupt-Kalibrierstruktur-Winkelebene (yz) angeordnet sind, wobei die Haupt-Kalibrierstruktur-Winkelebene unter einem Winkel größer als 5° zur Haupt-Kalibrierstruktur-Hauptebene angeordnet ist.

5. Verfahren zum Kalibrieren einer räumlichen Lage eines Zentrums einer Eintrittspupille einer Kamera (2) mit Hilfe einer Vorrichtung (1) nach einem der Ansprüche 1 bis 4 mit folgenden Schritten:
- Halten der zu kalibrierenden Kamera (2) in der Halterung (4),
- Erfassen der stationären Haupt-Kalibrierfläche (15 bis 17) mit der zu kalibrierenden Kamera (2) und den Referenzkameras (7 bis 10; 7 bis 10, 30) mit der Zusatz-Kalibrierfläche (22 bis 24) in der Neutralposition,
- Verlagern der Zusatz-Kalibrierfläche (22 bis 24) zwischen der Neutralposition und der Betriebsposition mit dem Kalibrierflächen-Verlagerungsantrieb (27),
- Erfassen der Zusatz-Kalibrierstrukturen (25) mit der zu kalibrierenden Kamera (2) und den Referenzkameras (7 bis 10; 7 bis 10, 30) mit der Zusatz-Kalibrierfläche (22 bis 24) in der Betriebsposition,
- Auswerten der aufgenommenen Bilddaten der zu kalibrierenden Kamera (2) und der Referenzkameras (7 bis 10; 7 bis 10, 30) mit der Auswerteeinheit (29).

6. Verfahren nach Anspruch 5 bei Rückbeziehung auf Anspruch 2, **gekennzeichnet durch** folgende weitere Schritte:
- Erfassen der Haupt-Kalibrierfläche (15 bis 17) und/oder der Zusatz-Kalibrierfläche (22 bis 24) mit der beweglichen Referenzkamera (30) in der ersten Sichtfeld-Aufnahmeposition,
- Verlagern der beweglichen Referenzkamera (30) mit dem Kamera-Verlagerungsantrieb (31),
- Erfassen der Haupt-Kalibrierfläche (15 bis 17) und/oder der Zusatz-Kalibrierfläche (22 bis 24) mit der beweglichen Referenzkamera (30) in der weiteren Sichtfeld-Aufnahmeposition,
- Auswerten der aufgenommenen Bilddaten der beweglichen Referenzkamera (30) mit der Auswerteeinheit (29).

7. System (41) zur Bestimmung relativer Positionen von Zentren von Eintrittspupillen mindestens zweier Kameras (42 bis 44), die an einem gemeinsamen Tragrahmen (45) montiert sind, zueinander
- mit mehreren Kalibrierstruktur-Trägerkomponenten (46 bis 49) mit Kalibrierstrukturen (18 bis 21), die um den Tragrahmen (45) herum so anordenbar sind, dass jede der Kameras (42 bis 44) mindestens Kalibrierstrukturen (18 bis 21) von zweien der Kalibrierstruktur-Trägerkomponenten (46 bis 49) erfasst, wobei die Anordnung der Kalibrierstruktur-Trägerkomponenten (46 bis 49) so ist, dass mindestens eine der Kalibrierstrukturen (18 bis 21) ein und derselben Kalibrierstruktur-Trägerkomponente (46 bis 49) von zwei Kameras erfasst wird,
- mit einer Auswerteeinheit (53) zur Verarbeitung von aufgenommenen Kameradaten der Kameras (42 bis 44),
wobei mindestens eine der Kameras des Systems Teil einer Vorrichtung nach Anspruch 1 ist.

8. Verfahren zur Bestimmung relativer Positionen von Zentren von Eintrittspupillen mindestens zweier Kameras (42 bis 44) unter Einsatz eines Systems (41) nach Anspruch 7 mit folgenden Schritten
- Montieren der Kameras (42 bis 44) am gemeinsamen Tragrahmen (45),
- Anordnen der Kalibrierstruktur-Trägerkomponenten (46 bis 49) als Gruppe von Kalibrierstruktur-Trägerkomponenten (46 bis 49) um den Tragrahmen (45),
- Erfassen der im Sichtfeld der Kameras (42 bis 44) liegenden Kalibrierstruktur-Trägerkomponenten (46 bis 49) in einer vorgegebenen Relativposition des Tragrahmens (45) zur Gruppe der Kalibrierstruktur-Trägerkomponenten (46 bis 49),
- Auswerten der aufgenommenen Bilddaten der Kameras (42 bis 44) mit der Auswerteeinheit (53).

9. Verfahren nach Anspruch 8 mit folgenden weiteren Schritten:
- Verlagern des Tragrahmens (45) derart, dass mindestens eine der Kameras (42 bis 44) eine Kalibrierstruktur-Trägerkomponente (46 bis 49) erfasst, die vorher noch nicht von dieser Kamera (42 bis 44) erfasst war,
- Wiederholen des Erfassens und des Verlagerns bis jede der Kameras (42 bis 44) mindestens Kalibrierstrukturen (18 bis 21) von zweien der Kalibrierstruktur-Trägerkomponenten (46 bis 49) erfasst hat, wobei Kalibrierstrukturen (18 bis 21) mindestens einer der Kalibrierstruktur-Trägerkomponenten (46 bis 49) von zwei Kameras (42 bis 44) erfasst worden ist.

10. Verfahren nach Anspruch 8 oder 9, **dadurch gekennzeichnet, dass** die Kalibrierstrukturen (18 bis 21) einer (46) der Kalibrierstruktur-Trägerkomponenten (46 bis 49) als Masterstrukturen zur Vorgabe eines Koordinatensystems (xyz) der zu ermittelnden Relativpositionen herangezogen werden.

## Claims

1. An apparatus (1) for calibrating a three-dimensional position of a centre of an entrance pupil of a camera (2),
- comprising a mount (4) for holding the camera (2) in such a manner that the latter captures a predetermined calibration field of view (5),
- comprising at least two stationary reference cameras (7 to 10) for recording the calibration field of view (5) from different directions (11 to 14),
- comprising at least one stationary main calibration surface (15 to 17) having stationary main calibration structures (18 to 21) that are arranged in the calibration field of view (5), **characterized in that**
- comprising at least one additional calibration surface (22 to 24) which has additional calibration structures (25) which driven to be displaceable between
-- a neutral position in which the additional calibration surface (22 to 24) is arranged outside the field of view (5), and
-- an operating position in which the additional calibration surface (22 to 24) is arranged within the field of view (5),
via a calibration surface displacement drive (27),
- comprising an evaluation unit (29) for processing recorded camera data of the camera (2) to be calibrated and of the reference cameras (7 to 10) and status parameters of the apparatus (1).

2. An apparatus according to claim 1, **characterized by** at least one further reference camera (30), which is movable relative to the mount (4), for recording the calibration field of view (5), which is driven to be displaceable between
- a first field of view recording position and
- at least one further field-of-view recording position that differs from the first field-of-view recording position in an image capture direction (32),
via a camera displacement drive (31).

3. An apparatus according to claim 1 or 2, **characterized in that** the additional calibration structures (25) of the respective additional calibration surface (22 to 24) are provided in a 3D arrangement that deviates from a flat surface.

4. An apparatus according to any one of claims 1 to 3, **characterized in that** the main calibration structures (18 to 21) are arranged in a main calibration structure main plane (xy) and additionally in a main calibration structure angular plane (yz), wherein the main calibration structure angular plane is arranged at an angle greater than 5° to the main calibration structure main plane.

5. A method for calibrating a three-dimensional position of a centre of an entrance pupil of a camera (2) by means of an apparatus (1) according to any one of claims 1 to 4, comprising the steps of:
- holding the camera to be calibrated (2) in the mount (4),
- capturing the stationary main calibration surface (15 to 17) with the camera (2) to be calibrated and the reference cameras (7 to 10; 7 to 10, 30) with the additional calibration surface (22 to 24) in the neutral position,
- displacing the additional calibration surface (22 to 24) between the neutral position and the operating position with the calibration surface displacement drive (27),
- capturing the additional calibration structures (25) with the camera (2) to be calibrated and the reference cameras (7 to 10; 7 to 10, 30) with the additional calibration surface (22 to 24) in the operating position,
- evaluating the recorded image data of the camera (2) to be calibrated and the reference cameras (7 to 10; 7 to 10, 30) with the evaluation unit (29).

6. A method according to claim 5 with reference back to claim 2, **characterized by** the following further steps:
- capturing the main calibration surface (15 to 17) and/or the additional calibration surface (22 to 24) with the movable reference camera (30) in the first field of view recording position,
- displacing the movable reference camera (30) with the camera displacement drive (31),
- capturing the main calibration surface (15 to 17) and/or the additional calibration surface (22 to 24) with the movable reference camera (30) in the further field of view recording position,
- evaluating the recorded image data of the movable reference camera (30) with the evaluation unit (29).

7. A system (41) for determining relative positions of centres of entrance pupils of at least two cameras (42 to 44) which are mounted on a common supporting frame (45) with respect to each other
- comprising a plurality of calibration structure carrier components (46 to 49) comprising calibration structures (18 to 21) that can be arranged around the supporting frame (45) such that each of the cameras (42 to 44) detects at least calibration structures (18 to 21) of two of the calibration structure carrier components (46 to 49), wherein the arrangement of the calibration structure carrier components (46 to 49) is such that at least one of the calibration structures (18 to 21) of one and the same calibration structure carrier component (46 to 49) is captured by two cameras,
- comprising an evaluation unit (53) for processing recorded camera data of the cameras (42 to 44),
wherein at least one of the cameras of the system is part of a device according to claim 1.

8. A method for determining relative positions of centres of entrance pupils of at least two cameras (42 to 44) using a system (41) according to claim 7, comprising the following steps
- mounting the cameras (42 to 44) on the common supporting frame (45),
- arranging the calibration structure carrier components (46 to 49) as a group of calibration structure carrier components (46 to 49) around the supporting frame (45),
- capturing the calibration structure carrier components (46 to 49) that are located in the field of view of the cameras (42 to 44) in a predetermined relative position of the supporting frame (45) to the group of calibration structure carrier components (46 to 49),
- evaluating the recorded image data of the cameras (42 to 44) with the evaluation unit (53).

9. A method according to claim 8, comprising the following further steps:
- displacing the supporting frame (45) in such a manner that at least one of the cameras (42 to 44) captures a calibration structure carrier component (46 to 49) which has not been previously detected by this camera (42 to 44),
- repeating the capturing and displacement until each of the cameras (42 to 44) has captured at least calibration structures (18 to 21) of two of the calibration structure carrier components (46 to 49), wherein calibration structures (18 to 21) of at least one of the calibration structure carrier components (46 to 49) have been captured by two cameras (42 to 44).

10. A method according to claim 8 or 9, **characterized in that** the calibration structures (18 to 21) of one (46) of the calibration structure carrier components (46 to 49) are used as master structures for specifying a coordinate system (xyz) of the relative positions to be determined.

## Revendications

1. Dispositif (1) pour étalonner une position spatiale d'un centre d'une pupille d'entrée d'une caméra (2) :
- avec un support (4) pour supporter la caméra (2) de telle sorte que celle-ci détecte un champ de vision d'étalonnage (5) prédéterminé,
- avec au moins deux caméras de référence fixes (7 à 10) pour capturer le champ de vision d'étalonnage (5) à partir de différentes directions (11 à 14),
- avec au moins une surface d'étalonnage principale fixe (15 à 17) comportant des structures d'étalonnage principales fixes (18 à 21), qui est agencée dans le champ de vision d'étalonnage (5),
**caractérisé par**
- avec au moins une surface d'étalonnage supplémentaire (22 à 24) qui comporte des structures d'étalonnage supplémentaires (25) qui sont entraînées pour pouvoir être déplacées entre
-- une position neutre dans laquelle la surface d'étalonnage supplémentaire (22 à 24) est agencée en dehors du champ de vision (5), et
-- une position de fonctionnement dans laquelle la surface d'étalonnage supplémentaire (22 à 24) est agencée à l'intérieur du champ de vision (5),
par un entraînement de déplacement de surface d'étalonnage (27),
- une unité d'évaluation (29) pour traiter des données de caméra capturées de la caméra (2) à étalonner et des caméras de référence (7 à 10), et des paramètres d'état du dispositif (1).

2. Dispositif selon la revendication 1, **caractérisé par** au moins une caméra de référence supplémentaire (30) mobile par rapport au support (4) pour capturer le champ de vision d'étalonnage (5), qui est entraînée pour pouvoir être déplacée entre
- une première position de capture de champ de vision et
- au moins une position supplémentaire de capture de champ de vision, qui est différente de la première position d de capture de champ de vision dans une direction de capture d'image (32),
par un entraînement de déplacement de caméra (31).

3. Dispositif selon la revendication 1 ou 2, **caractérisé en ce que** les structures d'étalonnage supplémentaires (25) de la surface d'étalonnage supplémentaire (22 à 24) respective se présentent dans un agencement 3D qui s'écarte d'une surface plane.

4. Dispositif selon l'une des revendications 1 à 3, **caractérisé en ce que** les structures d'étalonnage principales (18 à 21) sont agencées dans un plan principal de structure d'étalonnage principale (xy) et en outre dans un plan angulaire de structure d'étalonnage principale (yz), dans lequel le plan angulaire de structure d'étalonnage principale est agencé à un angle supérieur à 5° par rapport au plan principal de structure d'étalonnage principale.

5. Procédé pour étalonner une position spatiale d'un centre d'une pupille d'entrée d'une caméra (2) à l'aide d'un dispositif (1) selon l'une des revendications 1 à 4, comportant les étapes suivantes consistant à :
- maintenir la caméra (2) à étalonner dans le support (4),
- détecter la surface d'étalonnage principale fixe (15 à 17) avec la caméra (2) à étalonner et les caméras de référence (7 à 10 ; 7 à 10, 30) avec la surface d'étalonnage supplémentaire (22 à 24) dans la position neutre,
- déplacer la surface d'étalonnage supplémentaire (22 à 24) entre la position neutre et la position de fonctionnement avec l'entraînement de déplacement de surface d'étalonnage (27),
- détecter les structures d'étalonnage supplémentaires (25) avec la caméra (2) à étalonner et les caméras de référence (7 à 10 ; 7 à 10, 30) avec la surface d'étalonnage supplémentaire (22 à 24) dans la position de fonctionnement,
- évaluer les données d'image capturées de la caméra (2) à étalonner et des caméras de référence (7 à 10; 7 à 10, 30) avec l'unité d'évaluation (29).

6. Procédé selon la revendication 5 lorsque dépendante de la revendication 2, **caractérisé par** les étapes supplémentaires suivantes consistant à :
- détecter la surface d'étalonnage principale (15 à 17) et/ou la surface d'étalonnage supplémentaire (22 à 24) avec la caméra de référence mobile (30) dans la première position de capture de champ de vision ;
- déplacer la caméra de référence mobile (30) avec l'entraînement de déplacement de caméra (31),
- détecter la surface d'étalonnage principale (15 à 17) et/ou la surface d'étalonnage supplémentaire (22 à 24) avec la caméra de référence mobile (30) dans la position supplémentaire de capture de champ de vision,
- évaluer les données d'image capturées de la caméra de référence mobile (30) avec l'unité d'évaluation (29).

7. Système (41) pour déterminer des positions relatives de centres de pupilles d'entrée d'au moins deux caméras (42 à 44) qui sont montées sur un cadre de support commun (45),
- avec plusieurs composants de support de structure d'étalonnage (46 à 49) avec des structures d'étalonnage (18 à 21) qui peuvent être agencés autour du cadre de support (45) de telle sorte que chacune des caméras (46 à 44) détecte au moins des structures d'étalonnage (18 à 21) de deux des composants de support de structure d'étalonnage (46 à 49), dans lequel l'agencement des composants de support de structure d'étalonnage (42 à 49) est tel qu'au moins une des structures d'étalonnage (18 à 21) d'un seul et même composant de support de structure d'étalonnage (46 à 49) est détectée par deux caméras,
- avec une unité d'évaluation (53) pour le traitement de données de caméra capturées des caméras (42 à 44),
dans lequel au moins une des caméras du système fait partie d'un dispositif selon la revendication 1.

8. Procédé pour déterminer des positions relatives de centres de pupilles d'entrée d'au moins deux caméras (42 à 44) en utilisant un système (41) selon la revendication 7, comportant les étapes suivantes consistant à :
- monter les caméras (42 à 44) sur le cadre de support commun (45),
- agencer les composants de support de structure d'étalonnage (46 à 49) comme un groupe de composants de support de structure d'étalonnage (46 à 49) autour du cadre de support (45),
- détecter les composants de support de structure d'étalonnage (46 à 49) situés dans le champ de vision des caméras (42 à 44) dans une position relative prédéterminée du cadre de support (45) par rapport au groupe de composants de support de structure d'étalonnage (46 à 49),
- évaluer les données d'image capturées des caméras (42 à 44) avec l'unité d'évaluation (53).

9. Procédé selon la revendication 8 comportant les étapes supplémentaires suivantes consistant à :
- déplacer le cadre de support (45) de telle sorte qu'au moins une des caméras (42 à 44) détecte un composant de support de structure d'étalonnage (46 à 49) qui n'a pas encore été détecté par cette caméra (42 à 44),
- répéter la détection et le déplacement jusqu'à ce que chacune des caméras (42 à 44) ait détecté au moins des structures d'étalonnage (18 à 21) de deux des composants de support de structure d'étalonnage (46 à 44), dans lequel des structures d'étalonnage (18 à 21) d'au moins un des composants de support de structure d'étalonnage (46 à 49) ont été détectées par deux caméras (42 à 49).

10. Procédé selon la revendication 8 ou 9, **caractérisé en ce que** les structures d'étalonnage (18 à 21) d'un (46) des composants de support de structure d'étalonnage (46 à 49) sont considérées comme des structures maîtres pour spécifier un système de coordonnées (xyz) des positions relatives à déterminer.
